(19) Europäisches Patentamt
European Patent Office
Office européen des brevets

(11) **EP 4 648 535 A1**

(12) **EUROPEAN PATENT APPLICATION**
published in accordance with Art. 153(4) EPC

(43) Date of publication:
**12.11.2025 Bulletin 2025/46**

(21) Application number: **23922535.2**

(22) Date of filing: **27.12.2023**

(51) International Patent Classification (IPC):
*H04W 74/0833* (2024.01)

(52) Cooperative Patent Classification (CPC):
**H04W 72/12; H04W 74/0833**

(86) International application number:
**PCT/CN2023/142344**

(87) International publication number:
**WO 2024/169420 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.02.2023 CN 202310146209**

(71) Applicant: **Huawei Technologies Co., Ltd.
Shenzhen, Guangdong 518129 (CN)**

(72) Inventors:
• **HOU, Hailong
Shenzhen, Guangdong 518129 (CN)**
• **JIN, Zhe
Shenzhen, Guangdong 518129 (CN)**
• **WEN, Ronghui
Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND APPARATUS**

(57) This application provides a communication method and apparatus, to resolve a problem that random access fails because a bandwidth of a downlink message exceeds a baseband processing capability of a terminal device. The method includes: sending a first physical random access channel to a network device; and if a first random access response corresponding to the first physical random access channel is not received in a first random access response time window, sending the first physical random access channel to the network device in a first time period, where duration of the first time period is greater than duration of a second time period, the second time period is used by a second-type terminal device to re-perform random access when a second random access response is not received in a random access response time window, and the second random access response is a random access response corresponding to a physical random access channel sent by the second-type terminal device. When random access fails, a physical random access channel is resent in an extended first time period, so that a random access success probability can be increased.

Terminal device → Network device

S501: First PRACH

S502: If a first RAR is not received in a first RAR time window, send the first PRACH to the network device in a first time period

FIG. 5

EP 4 648 535 A1

**Description**

CROSS-REFERENCE TO RELATED APPLICATIONS

This application claims priority to Chinese Patent Application No. 202310146209.8, filed with the China National Intellectual Property Administration on February 13, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Further reducing a maximum bandwidth of user equipment (user equipment, UE) is being considered in a new radio (new radio, NR) standard Rel-18 version. In the Rel-18 version, a radio frequency maximum bandwidth of the UE remains 20 MHz, and only baseband bandwidth capabilities of two channels, namely, a physical downlink shared channel (physical downlink shared channel, PDSCH) and a physical uplink shared channel (physical uplink shared channel, PUSCH), are reduced.

Transmission of a random access response (random access response, RAR) is performed in a range of a bandwidth part (bandwidth part, BWP), and a maximum bandwidth of the BWP does not exceed the maximum bandwidth of the UE. For UE in a version earlier than the Rel-18 version, a radio frequency maximum bandwidth of the UE is equal to a baseband maximum bandwidth of the UE. Therefore, it may be considered that a scheduling bandwidth of the RAR is in ranges of a radio frequency bandwidth and a baseband bandwidth of the UE, and does not exceed receiving and processing capabilities of the UE. However, for the UE in the R18 version, because the radio frequency maximum bandwidth of the UE is 20 MHz, and a baseband maximum bandwidth of the UE is 5 MHz, if a scheduling bandwidth of a RAR of the UE in the R18 version exceeds 5 MHz, a bandwidth size of the RAR exceeds a baseband processing capability of the UE. Consequently, the UE may fail to complete processing such as decoding and parsing of the RAR, and a random access failure is caused.

SUMMARY

This application provides a communication method and apparatus, to resolve a problem that random access fails because a scheduling bandwidth of a downlink message exceeds a baseband processing capability of a terminal device.

According to a first aspect, this application provides a communication method. The method may be performed by a terminal device, or may be performed by a chip or a circuit. The terminal device is used as an example. The method includes: sending a first physical random access channel to a network device; and if a first random access response corresponding to the first physical random access channel is not received in a first random access response time window, sending the first physical random access channel to the network device in a first time period. Duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

In this application, when random access fails, the terminal device may resend a physical random access channel in an extended first time period, so that the terminal device can have more time to process a physical downlink shared channel. Therefore, a probability of successfully receiving (or decoding) the physical downlink shared channel can be increased, and a random access success probability can be increased.

In a possible design, that the first random access response corresponding to the first physical random access channel is not received in the first random access response time window may be one of the following scenarios:

first downlink control information from the network device is not received in the first random access response time window, where the first downlink control information is used to schedule a physical downlink shared channel carrying a random access response;

first downlink control information from the network device is received in the first random access response time window, where first N bits of a system frame number carried in the first downlink control information in ascending order are different from first N bits of a system frame number corresponding to the first physical random access channel in ascending order, N is an integer greater than 0, and the first downlink control information is used to schedule a physical downlink shared channel carrying a random access response;

first downlink control information from the network device is received in the first random access response time window, and a transport block of a physical downlink shared channel scheduled by using the first downlink control information is not correctly received, where the first downlink control information is used to schedule a physical downlink shared channel carrying a random access response; or

first downlink control information is received in the first random access response time window, and a transport block of a physical downlink shared channel scheduled by using the first downlink control information is correctly received, where the physical downlink shared channel scheduled by using the first downlink control information does not carry the first random access response, and the first downlink control information is used to schedule a physical downlink shared channel carrying a random access response.

In the foregoing design, the scenarios in which the random access response is not received are not distinguished, and random access is re-initiated in the first time period in any scenario in which the random access response is not received, so that implementation complexity of the terminal device can be reduced.

In a possible design, that the random access response corresponding to the first physical random access channel is not received in the first random access response time window may be one of the following scenarios:

first downlink control information from the network device is received in the first random access response time window, and a transport block of a physical downlink shared channel scheduled by using the first downlink control information is not correctly received, where a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response; or

first downlink control information is received in the first random access response time window, and a transport block of a physical downlink shared channel scheduled by using the first downlink control information is correctly received, where the physical downlink shared channel scheduled by using the first downlink control information does not carry the first random access response, a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response.

In the foregoing design, the scenarios in which the random access response is not received are distinguished. In a scenario in which the physical downlink shared channel needs to be parsed (or decoded) or the bandwidth of the physical downlink shared channel is large, random access is re-performed in a second time period with long duration, so that the terminal device can have more time to process the physical downlink shared channel. Therefore, the probability of successfully receiving (or decoding) the physical downlink shared channel can be increased, and the random access success probability can be increased.

In a possible design, the method further includes: sending a second physical random access channel to the network device; and if one of the following scenarios is met, sending the second physical random access channel to the network device in the second time period:

second downlink control information is not received in a second random access response time window, where the second downlink control information is used to schedule a physical downlink shared channel carrying a random access response;

second downlink control information is received in a second random access response time window, where first M bits of a system frame number carried in the second downlink control information in ascending order are different from first M bits of a system frame number corresponding to the second physical random access channel in ascending order, M is an integer greater than 0, and the second downlink control information is used to schedule a physical downlink shared channel carrying a random access response;

second downlink control information is received in a second random access response time window, and a transport block of a physical downlink shared channel scheduled by using the second downlink control information is not correctly received, where a bandwidth of the physical downlink shared channel scheduled by using the second downlink control information is not greater than a maximum bandwidth of baseband processing of the first-type terminal device; or

second downlink control information is received in a second random access response time window, and a transport block of a physical downlink shared channel scheduled by using the second downlink control information is correctly received, where the physical downlink shared channel scheduled by using the second downlink control information does not carry a random access response corresponding to the second physical random access channel, and a bandwidth of the physical downlink shared channel scheduled by using the second downlink control information is not greater than a maximum bandwidth of baseband processing of the first-type terminal device.

In the foregoing design, the scenarios in which the random access response is not received are distinguished. In a scenario in which the physical downlink shared channel does not need to be parsed (or decoded) or the bandwidth of the physical downlink shared channel is small, random access is re-performed in a second time period with short duration, so that a random access latency can be reduced, to improve communication performance.

In a possible design, the duration of the first time period is ($N_{T,1}$ + a + X), and the duration of the second time period is ($N_{T,1}$ + a). $N_{T,1}$ is processing duration of a physical downlink shared channel of the first-type terminal device or the second-type terminal device, X is greater than 0, and a is a preset value.

In a possible design, X is predefined; X is K times $N_{T,1}$, and K is greater than or equal to 1; or X is determined based on a bandwidth of a physical downlink shared channel carrying the first random access response and the maximum bandwidth of the baseband processing of the first-type terminal device.

According to the foregoing design, the random access success probability can be increased, and the random access latency can be reduced.

In a possible design, the method further includes: if the first random access response from the network device is received in the first random access response time window, and the bandwidth of the physical downlink shared channel carrying the first random access response is greater than the maximum bandwidth of the baseband processing of the first-type terminal device, sending a third message (Msg3) in a random access procedure to the network device after a third time period; or if the first random access response is received in the first random access response time window, and the bandwidth of the physical downlink shared channel carrying the first random access response is not greater than the maximum bandwidth of the baseband processing of the first-type terminal device, sending a Msg3 in a random access procedure to the network device after a fourth time period, where duration of the third time period is greater than duration of the fourth time period.

According to the foregoing design, when a bandwidth of a physical downlink shared channel carrying a random access response is greater than a bandwidth of the terminal device, time for re-performing random access is prolonged, so that time for decoding the physical downlink shared channel can be prolonged, and a probability of successfully obtaining information carried in the physical downlink shared channel can be increased. This helps increase a probability of successfully sending the Msg3 and improve random access performance.

In a possible design, the duration of the third time period is ($N_{T,1}$ + $N_{T,2}$ + b + Y), and the duration of the fourth time period is ($N_{T,1}$ + $N_{T,2}$ + b). $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

In a possible design, Y is predefined, for example, Y is equal to 1 ms; Y is T times $N_{T,1}$, and T is greater than or equal to 1; or Y is determined based on the bandwidth of the physical downlink shared channel carrying the first random access response and the maximum bandwidth of the baseband processing of the first-type terminal device.

According to the foregoing design, the probability of successfully sending the Msg3 can be increased, and a latency of sending the Msg3 can be reduced.

In a possible design, the method further includes: receiving contention resolution information from the network device; and if a bandwidth of a physical downlink shared channel carrying the contention resolution information is greater than the maximum bandwidth of the baseband processing of the first-type terminal device, sending acknowledgment information of the contention resolution information to the network device after a fifth time period; or if a bandwidth of a physical downlink shared channel carrying the contention resolution information is not greater than the maximum bandwidth of the baseband processing of the first-type terminal device, sending acknowledgment information of the contention resolution information to the network device after a sixth time period, where duration of the fifth time period is greater than duration of the sixth time period.

According to the foregoing design, when the bandwidth of the physical downlink shared channel carrying the contention resolution information is greater than the bandwidth of the terminal device, the time for re-performing random access is prolonged, so that the time for decoding the physical downlink shared channel can be prolonged, and a probability of successfully obtaining the contention resolution information can be increased. This helps increase a probability of successfully sending the acknowledgment information of the contention resolution information and improve the random access performance.

In a possible design, the duration of the fifth time period is ($N_{T,1}$ + c + Z), and the duration of the sixth time period is ($N_{T,1}$ + c). $N_{T,1}$ is the processing duration of the physical downlink shared channel of the first-type terminal device or the second-type terminal device, Z is greater than 0, and c is a preset value.

In a possible design, Z is predefined; Z is H times $N_{T,1}$, and H is greater than or equal to 1; or Z is determined based on the bandwidth of the physical downlink shared channel carrying the first random access response and the maximum bandwidth of the baseband processing of the first-type terminal device.

According to the foregoing design, the probability of successfully sending the acknowledgment information of the contention resolution information can be increased, and a latency of sending the acknowledgment information of the contention resolution information can be reduced.

In a possible design, a start time point of the first time period is a last symbol of the first random access response time window; or a start time point of the first time period is a last symbol of a physical downlink shared channel in the first random access response time window.

In a possible design, the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

According to a second aspect, this application provides a communication method. The method may be performed by a network device, or may be performed by a chip or a circuit. The network device is used as an example. The method includes: monitoring a first physical random access channel from a terminal device; and monitoring the first physical random access channel from the terminal device again in a first time period. Duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

In this application, when random access fails, the terminal device may resend a physical random access channel in an extended first time period, so that the terminal device can have more time to process a physical downlink shared channel. Therefore, a probability of successfully receiving (or decoding) the physical downlink shared channel can be increased, and a random access success probability can be increased.

In a possible design, the method further includes: sending a first physical downlink shared channel to the terminal device in a first random access response time window. The first physical downlink shared channel is used to carry a random access response, and a bandwidth of the first physical downlink shared channel is greater than a maximum bandwidth of baseband processing of the first-type terminal device.

In a possible design, the method further includes: monitoring a second physical random access channel from the terminal device; sending a second physical downlink shared channel to the terminal device in a second random access response time window, where a bandwidth of the second physical downlink shared channel is not greater than the maximum bandwidth of the baseband processing of the first-type terminal device, and the second physical downlink shared channel is used to carry a random access response; and monitoring the second physical random access channel from the terminal device again in the second time period.

According to the foregoing design, a random access latency can be reduced, to improve communication performance.

In a possible design, the duration of the first time period is ($N_{T,1}$ + a + X), and the duration of the second time period is ($N_{T,1}$ + a). $N_{T,1}$ is processing duration of a physical downlink shared channel of the first-type terminal device or the second-type terminal device, X is greater than 0, and a is a preset value.

In a possible design, X is predefined; X is K times $N_{T,1}$, and K is greater than or equal to 1; or X is determined based on a bandwidth of a physical downlink shared channel carrying a first random access response and the maximum bandwidth of the baseband processing of the first-type terminal device.

According to the foregoing design, the random access success probability can be increased, and the random access latency can be reduced.

In a possible design, the method further includes: sending a random access response of the first physical random access channel to the terminal device; and if a bandwidth of a physical downlink shared channel carrying the random access response is greater than the maximum bandwidth of the baseband processing of the first-type terminal device, receiving a third message Msg3 in a random access procedure from the terminal device after a third time period; or if a bandwidth of a physical downlink shared channel carrying the random access response is not greater than the maximum bandwidth of the baseband processing of the first-type terminal device, receiving a third message Msg3 in a random access procedure from the terminal device after a fourth time period, where duration of the third time period is greater than duration of the fourth time period.

The foregoing design helps increase a probability of successfully receiving the Msg3 and improve random access performance.

In a possible design, the duration of the third time period is ($N_{T,1}$ + $N_{T,2}$ + b + Y), and the duration of the fourth time period is ($N_{T,1}$ + $N_{T,2}$ + b). $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

In a possible design, Y is predefined, for example, Y is equal to 1 ms; Y is T times $N_{T,1}$, and T is greater than or equal to 1; or Y is determined based on the bandwidth of the physical downlink shared channel carrying the first random access response and the maximum bandwidth of the baseband processing of the first-type terminal device.

According to the foregoing design, a probability of successfully receiving the Msg3 can be increased, and a latency of receiving the Msg3 can be reduced.

In a possible design, the method further includes: sending contention resolution information to the terminal device; and if a bandwidth of a physical downlink shared channel carrying the contention resolution information is greater than the maximum bandwidth of the baseband processing of the first-type terminal device, receiving acknowledgment information of the contention resolution information from the terminal device after a fifth time period; or if a bandwidth of a physical downlink shared channel carrying the contention resolution information is not greater than the maximum bandwidth of the baseband processing of the first-type terminal device, receiving acknowledgment information of the contention resolution information from the terminal device after a sixth time period. Duration of the fifth time period is greater than duration of the sixth time period, the fifth time period corresponds to the first-type terminal device, and the sixth time period corresponds to the first-type terminal device or the second-type terminal device.

The foregoing design helps increase a probability of successfully receiving the acknowledgment information of the contention resolution information and improve the random access performance.

In a possible design, the duration of the fifth time period is $(N_{T,1} + c + Z)$, and the duration of the sixth time period is $(N_{T,1} + c)$. $N_{T,1}$ is the processing duration of the physical downlink shared channel of the first-type terminal device or the second-type terminal device, Z is greater than 0, and c is a preset value.

In a possible design, Z is predefined; Z is H times $N_{T,1}$, and H is greater than or equal to 1; or Z is determined based on the bandwidth of the physical downlink shared channel carrying the first random access response and the maximum bandwidth of the baseband processing of the first-type terminal device.

According to the foregoing design, the probability of successfully receiving the acknowledgment information of the contention resolution information can be increased, and a latency of receiving the acknowledgment information of the contention resolution information can be reduced.

In a possible design, a start time point of the first time period is a last symbol of the first random access response time window; or a start time point of the first time period is a last symbol of a physical downlink shared channel in the first random access response time window.

In a possible design, the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

According to a third aspect, this application further provides a communication apparatus. The communication apparatus implements any method according to the first aspect. The communication apparatus may be implemented by hardware, or may be implemented by executing corresponding software by hardware. The hardware or the software includes one or more units or modules corresponding to the foregoing function.

In a possible design, the communication apparatus includes a processor, and the processor is configured to support the communication apparatus in performing a corresponding function of the terminal device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a network device.

For example, the communication apparatus has a function of implementing the method according to the first aspect, and the processor may be configured to: send a first physical random access channel to the network device through the interface circuit; and if a first random access response corresponding to the first physical random access channel is not received in a first random access response time window, send the first physical random access channel to the network device in a first time period through the interface circuit.

In a possible design, the communication apparatus includes corresponding functional modules separately configured to implement the steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method according to the first aspect. Details are not described herein again.

For example, the communication apparatus has a function of implementing the method according to the first aspect. The processing unit is configured to: send a first physical random access channel to a network device through the communication unit; and if a first random access response corresponding to the first physical random access channel is not received in a first random access response time window, send the first physical random access channel to the network device in a first time period through the communication unit.

According to a fourth aspect, this application further provides a communication apparatus. The communication apparatus has a function of implementing any method according to the second aspect. The communication apparatus may be implemented by hardware, or may be implemented by executing corresponding software by hardware. The hardware or the software includes one or more units or modules corresponding to the foregoing function.

In a possible design, the communication apparatus includes a processor, and the processor is configured to support the communication apparatus in performing a corresponding function of the reader/writer in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device.

For example, the communication apparatus has a function of implementing the method according to the second aspect, and the processor may be configured to: monitor a first physical random access channel from the terminal device through the interface circuit; and monitor the first physical random access channel from the terminal device again in a first time period through the interface circuit.

In a possible design, the communication apparatus includes corresponding functional modules separately configured to implement the steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a first communication module). These units may perform corresponding functions in the foregoing method examples. For details, refer to the descriptions in the method according to the second aspect. Details are not described herein again.

For example, the communication apparatus has a function of implementing the method according to the second aspect, and the processing unit may be configured to: monitor a first physical random access channel from the terminal device through the communication unit; and monitor the first physical random access channel from the terminal device again in a first time period through the communication unit.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect and the possible designs through a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs through a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, and may further include a memory, configured to implement the method in any one of the first aspect or the second aspect and the possible designs. The chip system may include a chip, or may include a chip and another discrete component.

According to a tenth aspect, a communication system is provided. The system includes the apparatus (for example, the terminal device) according to the first aspect and the apparatus (for example, the network device) according to the second aspect.

BRIEF DESCRIPTION OF DRAWINGS

FIG. 1 is a schematic flowchart of 4-step random access according to an embodiment of this application;
FIG. 2 is a schematic flowchart of 2-step random access according to an embodiment of this application;
FIG. 3 is a diagram of an architecture of a network system according to an embodiment of this application;
FIG. 4 is a diagram of a connection between a terminal device and a network device according to an embodiment of this application;
FIG. 5 is a schematic flowchart of a communication method according to an embodiment of this application;
FIG. 6 is a diagram of a structure of a communication apparatus according to an embodiment of this application; and
FIG. 7 is a diagram of a structure of a communication apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

(1) A terminal device may be a device having a wireless transceiver function or a chip that can be disposed in any device, and may also be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having a wireless transceiver function, an XR device (for example, a VR device, an AR device, or an MR device), a wireless terminal in industrial control (industrial control), a wireless terminal in self driving (self driving), a wireless terminal in video surveillance, a wearable terminal device, or the like. Alternatively, the terminal device may be eMBB UE, URLLC UE, an uncrewed aerial vehicle, another internet of things (internet of things, IoT) device, a positioning device, or the like. A network device may be an apparatus configured to implement a function of an access network device. The access network device may be a device that communicates with a wireless terminal device over an air interface in an access network by using one or more cells. For example, the access network device may be a next generation NodeB (next generation NodeB, gNB) in an NR system, or an evolved NodeB (evolved NodeB, eNB) in a long term evolution (long term evolution, LTE) system. Alternatively, the network device may be an apparatus that can support the network device in implementing the function of the access network device, for example, a chip system. The apparatus may be installed in the network device.

(2) Embodiments of this application relate to two types of terminal devices, namely, a first-type terminal device and a second-type terminal device. A maximum bandwidth of baseband processing of the first-type terminal device is different from a maximum radio frequency bandwidth of the first-type terminal device. For example, the maximum bandwidth of the baseband processing of the first-type terminal device may be less than the maximum radio frequency bandwidth of the first-type terminal device. For example, the maximum radio frequency bandwidth of the first-type terminal device is 20 MHz, and the maximum bandwidth of the baseband processing is 5 MHz.

A maximum bandwidth of baseband processing of the second-type terminal device is equal to a maximum radio frequency bandwidth of the second-type terminal device. The maximum radio frequency bandwidth of the first-type terminal device may be less than the maximum radio frequency bandwidth of the second-type terminal device, or the maximum radio frequency bandwidth of the first-type terminal device may be equal to the maximum radio frequency bandwidth of the second-type terminal device. This is not specifically limited in this application.

For example, the first-type terminal device may be a terminal device in NR Rel-18 or a later version. In descriptions of an example, the first-type terminal device may be understood as a terminal device whose capability is further reduced on the basis of the second-type terminal device. For example, in comparison with the second-type terminal device, a baseband processing capability of the first-type terminal device is reduced.

The second-type terminal device may be a legacy terminal device (legacy UE), for example, may be an enhanced mobile broadband (enhanced Mobile Broadband, eMBB) terminal device or an ultra-reliable low-latency communication (ultra-reliable low-latency communication, URLLC) terminal device. The second-type terminal device may alternatively be a reduced capability (reduced capability, RedCap) terminal device (RedCap UE). The RedCap UE may be understood as a terminal device whose capability is reduced in comparison with a legacy terminal device (legacy UE).

A difference between the legacy UE and the RedCap UE includes at least one of the following.

1. Bandwidth capabilities are different. A maximum bandwidth supported by the legacy UE may be greater than a maximum bandwidth supported by the RedCap UE. For example, the legacy UE may support communication with the network device by using a maximum of 100 MHz frequency domain resources at the same time on one carrier, and the RedCap UE may support communication with the network device by using a maximum of 20 MHz, 10 MHz, or 5 MHz frequency domain resources at the same time on one carrier.

2. Quantities of transceiver antennas are different. An antenna configuration of the legacy UE may be greater than an antenna configuration of the RedCap UE. For example, a minimum antenna configuration supported by the legacy UE may be greater than a maximum antenna configuration supported by the RedCap UE. For example, the minimum antenna configuration supported by the legacy UE may be 4T2R. To be specific, in the minimum antenna configuration, four receive antennas are used to receive downlink signals, and two transmit antennas are used to transmit uplink signals. The maximum antenna configuration supported by the RedCap UE may be lower than 4T2R. For example, the RedCap UE supports only 1T2R, or may support 2T2R.

3. Maximum uplink transmit power is different. Maximum uplink transmit power of the legacy UE may be greater than maximum uplink transmit power of the RedCap UE. For example, the maximum uplink transmit power of the legacy UE may be 23 dBm or 26 dBm, and the maximum uplink transmit power of the RedCap UE can only be a value in 4 dBm to 20 dBm.

4. The legacy UE and the RedCap UE correspond to different protocol versions. For example, NR Rel-15 and NR Rel-16 terminal devices may be considered as legacy UE, and the RedCap UE may be considered as a terminal device in NR Rel-17.

5. The legacy UE and the RedCap UE support different carrier aggregation (carrier aggregation, CA) capabilities. For example, the legacy UE may support carrier aggregation, but the RedCap UE does not support carrier aggregation. For another example, both the RedCap UE and the legacy UE support carrier aggregation, but a maximum quantity of carriers for aggregation at the same time by the legacy UE is greater than a maximum quantity of carriers for aggregation at the same time by the RedCap UE. For example, the legacy UE may support aggregation of a maximum of five carriers or 32 carriers at the same time, but the RedCap UE supports aggregation of a maximum of two carriers at the same time.

6. The legacy UE and the RedCap UE have different frequency division duplex (frequency division duplex, FDD) capabilities. For example, the legacy UE may support full duplex FDD, but the RedCap UE may support only half duplex FDD.

7. The RedCap UE and the legacy UE have different data processing time capabilities. For example, a minimum latency between receiving downlink data by the legacy UE and sending a feedback on the downlink data is less than a minimum latency between receiving downlink data by the RedCap UE and sending a feedback on the downlink data, and/or a minimum latency between sending uplink data by the legacy UE and receiving a feedback on the uplink data is less than a minimum latency between sending uplink data by the RedCap UE and receiving a feedback on the uplink data.

8. The legacy UE and the RedCap UE have different processing capabilities.

9. The legacy UE and the RedCap UE correspond to different uplink and/or downlink peak transmission rates.

It should be noted that the first-type terminal device may also be referred to as RedCap UE. In the following embodiments, to distinguish between the first-type terminal device and RedCap UE in the second-type terminal device, the RedCap UE in the second-type terminal device is referred to as the terminal device in NR Rel-17.

(3) Baseband bandwidth (baseband bandwidth, BB Bandwidth)

In the NR system, a signal processing part of the terminal device includes a radio frequency processing unit and a baseband processing unit. The baseband processing unit may include functional modules such as digital-to-analog conversion (ADC)/analog-to-digital conversion (DAC), fast Fourier transform (FFT)/inverse fast Fourier transform (IFFT), post-FFT data buffering (post-FFT data buffering), a receiver processing block (receiving processing block), LDPC decoding (LDPC decoding), hybrid automatic repeat buffer (HARQ buffer), a downlink control processing and decoder (DL control processing and decoder), an uplink processing block (UL processing), a MIMO specific processing block (MIMO specific processing block), and a synchronization and cell search block (Synchronization/cell search block). Software and hardware implementations of different terminal devices may be different, and support and implementations of the foregoing baseband functional modules may also be different. This is not limited in this application. Baseband bandwidth capabilities of the terminal device may be understood as bandwidth capabilities of all or some functional blocks in the foregoing radio frequency functional blocks and baseband modules.

Currently, the terminal device may have different baseband processing capabilities for different channels. For example, for a data channel (for example, a PDSCH and a PUSCH), a baseband processing bandwidth of the RedCap terminal device is 5 MHz, and for another physical channel or signal, a baseband processing capability of the RedCap terminal device is 20 MHz. Further, for the data channel, a bandwidth of the post-FFT data buffering in the baseband processing module of the terminal device may be different from a bandwidth of another baseband module. For example, the bandwidth of the post-FFT data buffering is 20 MHz, and the bandwidth of the another baseband module is 5 MHz.

(4) Radio frequency bandwidth (radio frequency bandwidth, RF bandwidth)

The radio frequency processing unit may include functional modules such as an antenna array, a power amplifier, a filter, a transmitter, a duplexer, or a converter, and is configured to receive and send information. Software and hardware implementations of different terminal devices may be different, and support and implementations of the foregoing radio frequency functional modules may also be different. This is not limited in this application.

(5) A random access procedure includes a contention-based random access (contention-based random access, CBRA) procedure and a contention-free random access (contention-free random access, CFRA) procedure. The following describes the CBRA procedure.

The CBRA procedure may be completed through a 4-step random access channel (random access channel, RACH) or a 2-step RACH.

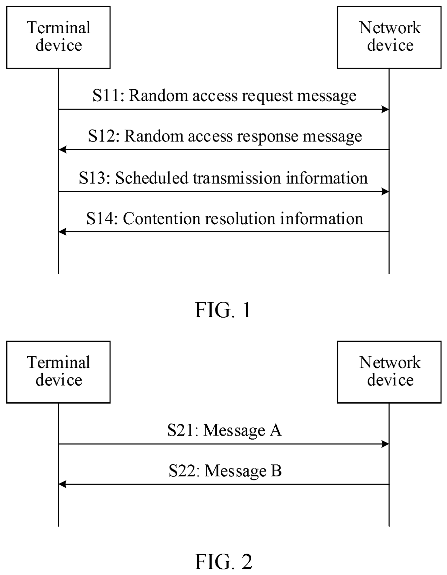

Refer to FIG. 1. A 4-step RACH procedure includes the following steps.

S11: A terminal device sends a random access request message to a network device, and the network device receives the random access request message from the terminal device. The random access request message may also be referred to as a message 1 (Msg1), and includes a random access preamble (preamble).

S12: The network device sends a random access response (random access response, RAR) message to the terminal device, and the terminal device receives the RAR message from the network device. The RAR message may also be referred to as a message 2 (Msg2).

S13: The terminal device sends scheduled transmission (scheduled transmission) information to the network device, and the network device receives the scheduled transmission information from the terminal device. A message carrying the scheduled transmission information is referred to as a message 3 (Msg3).

After receiving the RAR message, the terminal device performs message transmission based on scheduling of the RAR message. Specifically, the terminal device may send the Msg3 through a physical uplink shared channel (physical uplink shared channel, PUSCH) scheduled by using a RAR uplink grant (RAR UL grant) carried in a first RAR.

S14: The network device sends contention resolution (contention resolution) information to the terminal device, where a message carrying the contention resolution information is referred to as a message 4 (Msg4). The terminal device may obtain the contention resolution information by receiving the Msg4 from the network device.

The foregoing describes the 4-step RACH. The following describes a 2-step RACH. Refer to FIG. 2. A 2-step RACH includes the following steps.

S21: A terminal device sends a message A (MsgA) to a network device, and the network device receives the MsgA from the terminal device.

The terminal device selects a MsgA resource from common MsgA resources broadcast by the network device, and sends the MsgA on the MsgA resource. The MsgA resource includes a resource (a time-frequency-code) used to send a preamble and a corresponding PUSCH resource. The MsgA also includes two parts: the preamble and a PUSCH payload (payload).

It may be considered that the message MsgA includes the preamble and content included in the Msg3 in the 4-step RACH.

S22: The network device sends a message B (MsgB) to the terminal device, and the terminal device receives the MsgB from the network device.

The MsgB may include contention resolution information, and may include content included in the RAR message in the 4-step RACH.

The terms "system" and "network" may be used interchangeably in embodiments of this application. In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, unless otherwise stated on the contrary, ordinal numbers such as "first" and "second" mentioned in embodiments of this application are used to distinguish between a plurality of objects, and are not used to limit sizes, content, an order, a time sequence, priorities, importance degrees, or the like of the plurality of objects. For example, a first physical random access channel and a second physical random access channel are merely used to distinguish between different physical random access channels, but do not indicate different sending sequences, content, priorities, importance degrees, or the like of the two physical random access channels.

In embodiments of this application, a baseband bandwidth capability of a terminal device may also be described as a "baseband processing capability", "maximum baseband bandwidth", "baseband maximum bandwidth", "maximum baseband processing bandwidth", "maximum bandwidth of baseband processing", or the like.

A radio frequency bandwidth capability of the terminal device may also be described as a "radio frequency capability", "maximum radio frequency bandwidth", "radio frequency maximum bandwidth", "maximum bandwidth of radio frequency", or the like.

The foregoing describes some noun concepts used in embodiments of this application. The following describes technical features in embodiments of this application.

A bandwidth capability of an eMBB terminal device, for example, a terminal device in Rel-15/Rel-16, is 100 MHz. RedCap UE is introduced in Rel-17, a bandwidth capability of the RedCap UE is reduced in comparison with the bandwidth capability of the terminal in Rel-15/Rel-16, and a maximum bandwidth supported by the RedCap UE in an FR1 frequency band is reduced to 20 MHz. Therefore, costs of the terminal are greatly reduced. Currently, further reducing a maximum bandwidth of the terminal device is being considered in an NR standard Rel-18 version. In the Rel-18 version, uplink and downlink radio frequency bandwidth capabilities of the terminal device remain 20 MHz, only baseband bandwidth capabilities of two channels, namely, a physical downlink shared channel (physical downlink shared channel, PDSCH) and a physical uplink shared channel (physical uplink shared channel, PUSCH), are reduced, and a baseband bandwidth capability of 20 MHz is still maintained for other uplink and downlink physical channels and signals.

It is defined in a current NR protocol that a bandwidth of a bandwidth part (bandwidth part, BWP) configured by a network device for UE cannot exceed the maximum bandwidth of the UE. For the terminal device in the Rel-18 version, a maximum bandwidth of a BWP may be configured as 20 MHz. The baseband bandwidth capabilities of the two channels: the PDSCH and the PUSCH of the terminal device in the Rel-18 version are only 5 MHz. Transmission of a RAR is performed in a range of the BWP, and the maximum bandwidth of the BWP does not exceed the maximum bandwidth of the UE. For UE in a version earlier than the Rel-18 version, a radio frequency maximum bandwidth of the UE is equal to a baseband maximum bandwidth of the UE. Therefore, it may be considered that a scheduling bandwidth of the RAR is in ranges of a radio frequency bandwidth and a baseband bandwidth of the UE, and does not exceed receiving and processing capabilities of the UE. However, for the UE in the R18 version, because a radio frequency maximum bandwidth of the UE is 20 MHz, and a baseband maximum bandwidth of the UE is 5 MHz, if a scheduling bandwidth of a RAR of the UE in the R18 version exceeds 5 MHz, a bandwidth size of the RAR exceeds a baseband processing capability of the UE. Consequently, the UE may fail to complete processing such as decoding and parsing of the RAR, and a random access failure is caused.

Based on this, embodiments of this application provide a communication method and apparatus, to resolve a problem that random access fails because a scheduling bandwidth of a downlink message exceeds a baseband processing capability of the terminal device. The method and the apparatus are based on a same inventive concept. Because the method and the apparatus have similar problem-resolving principles, for implementation of the apparatus and implementation of the method, refer to each other. Repeated parts are not described again.

The communication method provided in this application may be applied to various communication systems, for example, an internet of things (internet of things, IoT), a narrowband internet of things (narrowband internet of things, NB-IoT), long term evolution (long term evolution, LTE) system, a 5th generation (5G) communication system, an LTE and 5G hybrid architecture, a 5G new radio (new radio, NR) system, and a 6G system or a new communication system emerging in future communication development. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network.

The network device and the terminal device may communicate with each other by using a licensed spectrum (licensed spectrum), may communicate with each other by using an unlicensed spectrum (unlicensed spectrum), or may communicate with each other by using both a licensed spectrum and an unlicensed spectrum. The network device and the terminal device may communicate with each other by using a spectrum below 6G, may communicate with each other by using a spectrum above 6G, or may communicate with each other by using both a spectrum below 6G and a spectrum above 6G. A spectrum resource used between the network device and the terminal device is not limited in embodiments of this application.

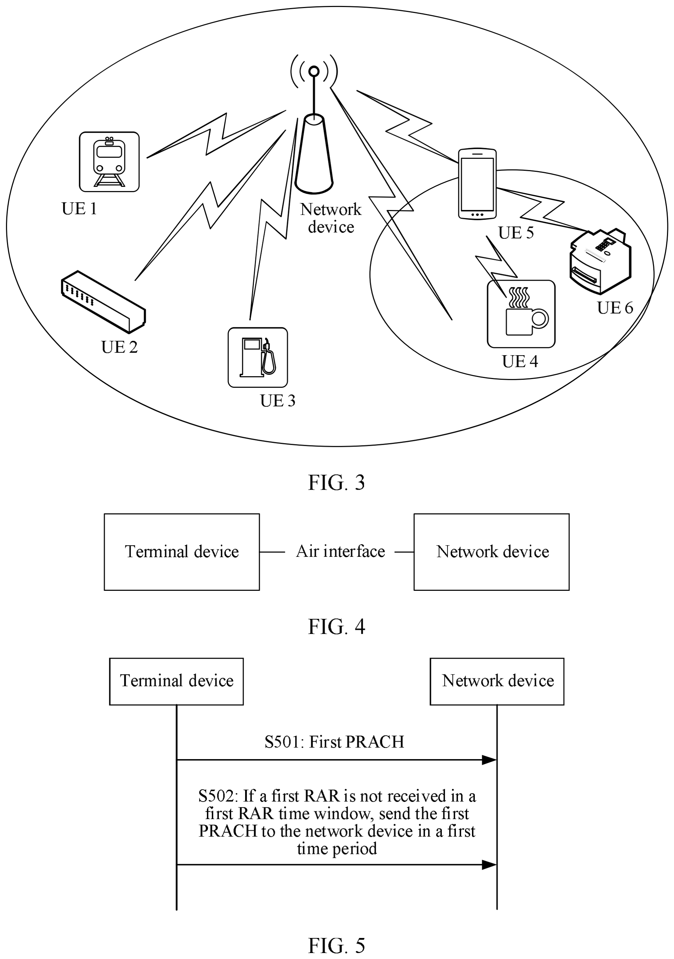

FIG. 3 shows a communication system according to an embodiment of this application. The communication system includes a network device and six terminal devices, namely, UE 1 to UE 6. In the communication system, the UE 1 to the UE 6 may send uplink data to the network device, and the network device may receive the uplink data sent by the UE 1 to the UE 6. In addition, the UE 4 to the UE 6 may also form a communication subsystem. The network device may send downlink information to the UE 1, the UE 2, the UE 3, and the UE 5, and the UE 5 may send the downlink information to the UE 4 and the UE 6 based on a device-to-device (device-to-device, D2D) technology. FIG. 3 is merely a diagram, and a type of the communication system, a quantity of devices included in the communication system, a type of the device included in the communication system, and the like are not specifically limited.

For example, the network device and the terminal device may be connected through an air interface. For example, a connection relationship between the network device and the terminal device may be shown in FIG. 4.

Embodiments of this application may be applied to a communication system serving a first-type terminal device. It is clear that embodiments of this application may also be applied to a communication system serving both the first-type terminal device and a second-type terminal device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The following describes the technical solutions in embodiments of this application with reference to the accompanying drawings in embodiments of this application by using a 4-step RACH as an example. For ease of description, the following uses an example in which the method is performed by the network device and the terminal device.

FIG. 5 is a schematic flowchart of a communication method according to this application. The method includes the following steps.

S501: A terminal device sends a first PRACH to a network device.

Correspondingly, the network device may monitor the first PRACH from the terminal device. The network device may detect the first PRACH through monitoring, or may not detect the first PRACH through monitoring. A monitoring result of the network device is not limited in this application.

Optionally, if the network device detects the first PRACH through monitoring, the network device may send, to the terminal device, a first RAR corresponding to the first PRACH, or may not send a first RAR corresponding to the first PRACH. This is not specifically limited in this application.

The terminal device may be a first-type terminal device.

The first PRACH may carry a preamble.

Optionally, before sending the first PRACH, the terminal device may obtain a parameter of first PRACH transmission, for example, a preamble format (preamble format) of the first PRACH transmission, a time domain resource occupied by the first PRACH transmission, a frequency domain resource occupied by the first PRACH transmission, and a preamble sequence-related parameter.

For example, a PRACH resource of the first-type terminal device may be the same as a PRACH resource of legacy UE, and may be different from a PRACH resource of a terminal device in NR Rel-17.

Alternatively, a PRACH resource of the first-type terminal device may be different from a PRACH resource of legacy UE, and may be the same as a PRACH resource of a terminal device in NR Rel-17.

Alternatively, a PRACH resource of the first-type terminal device may be different from PRACH resources of both legacy UE and a terminal device in NR Rel-17.

For details of the terminal device in NR Rel-17 and the legacy UE in embodiments of this application, refer to related descriptions of the second-type terminal device in the foregoing term introduction (2).

It should be noted that, that the PRACH resources are the same may be understood as that time domain resources occupied by PRACH transmission, frequency domain resources occupied by the PRACH transmission, and corresponding preamble resources (for example, the preamble format and the preamble sequence-related parameter) are completely the same. That the PRACH resources are different means that at least one of the time domain resources occupied by the PRACH transmission, the frequency domain resources occupied by the PRACH transmission, and the corresponding preamble resources is different.

In the foregoing manner, the PRACH resource of the first-type terminal device is different from the PRACH resource of the legacy UE and/or the terminal device in NR Rel-17. This helps the network device identify the first-type terminal device by using the PRACH resource, to help perform some dedicated resource scheduling for the first-type terminal device.

In an optional solution, an initial uplink BWP used by the first-type terminal device to send the first PRACH may be an initial uplink BWP of the legacy UE, may be an initial uplink BWP dedicated to the terminal device in NR Rel-17, or may be an initial uplink BWP dedicated to the first-type terminal device. The initial uplink BWP dedicated to the first-type terminal device may be specifically configured by the network device for the first-type terminal device by using a system information block 1 (system information block 1, SIB1), radio resource control (radio resource control, RRC) signaling, or the like. Alternatively, the initial uplink BWP dedicated to the first-type terminal device may be predefined or determined according to a predefined rule.

It should be noted that the foregoing content (for example, the PRACH resource and the initial uplink BWP used by the PRACH) related to the PRACH transmission may be independently implemented without depending on the method in FIG. 5.

In a possible implementation, after sending the first PRACH, the terminal device may monitor the first RAR corresponding to the first PRACH.

In a specific implementation, the terminal device monitors or detects first downlink control information (downlink control information, DCI) in a first RAR time window, where the first DCI is used to schedule a physical downlink shared channel (physical downlink shared channel, PDSCH) carrying a RAR. The first DCI may be DCI format 1_0 with cyclic redundancy check (cyclic redundancy check, CRC) scrambled by a corresponding random access-radio network temporary identifier (random access-radio network temporary identifier, RA-RNTI). The RA-RNTI may be determined based on a PRACH (that is, the first PRACH) sent by the terminal device.

An RAR time window may also be referred to as a RAR window. For example, the first RAR time window may also be referred to as a first RAR window, and a second RAR time window in the following may also be referred to as a second RAR window.

A start point of the RAR time window is located on a 1st symbol of an earliest control-resource set (control-resource set, CORESET) of a PDCCH on which a receive type 1 (Type1)-physical downlink control channel (physical downlink control channel, PDCCH) common search space (common search space, CSS) set (CSS set) is configured for the terminal device, and the start point of the RAR time window is at least on at least one symbol after a last symbol of a PRACH occasion corresponding to the PRACH transmission. The Type1-PDCCH CSS set is used to monitor DCI scrambled by an RA-RNTI or a MsgB-RNTI. For example, a start point of the first RAR time window is located on the 1st symbol of the earliest CORESET of the PDCCH on which the Type1-PDCCH CSS set is configured for the terminal device, and the start point of the first RAR time window is at least on at least one symbol after a last symbol of a PRACH occasion corresponding to the first PRACH transmission.

The Type1-PDCCH CSS set may be a Type1-PDCCH CSS set of the legacy UE, may be a Type1-PDCCH CSS set of the terminal device in NR Rel-17, or may be a Type1-PDCCH CSS set dedicated to the first-type terminal device. The Type1-PDCCH CSS set dedicated to the first-type terminal device may be a dedicated Type1-PDCCH CSS set additionally configured for the first-type terminal device or defined for the first-type terminal device.

Optionally, that the terminal device monitors or detects the first RAR in an initial downlink BWP may also be understood as that transmission of the first RAR is performed in the initial downlink BWP. The initial downlink BWP may be an initial downlink BWP defined by a frequency domain resource of a CORESET #0, may be an initial downlink BWP dedicated to the terminal device in NR Rel-17, or may be a dedicated initial downlink BWP additionally configured for the first-type terminal device. The initial downlink BWP dedicated to the first-type terminal device may be specifically configured by the network device for the first-type terminal device by using the SIB 1, the RRC signaling, or the like. Alternatively, the initial downlink BWP dedicated to the first-type terminal device may be predefined or determined according to a predefined rule.

In this application, the first RAR time window may be an existing random access response window, for example, may be a RAR time window of the legacy UE, or may be a RAR time window of the terminal device in NR Rel-17. Alternatively, the first RAR time window may be a RAR time window dedicated to the first-type terminal device. The RAR time window dedicated to the first-type terminal device may be a dedicated RAR time window additionally configured for the first-type terminal device or defined for the first-type terminal device. A parameter of the RAR time window dedicated to the first-type terminal device may be configured by the network device by using a SIB or the RRC signaling, and a start position and/or a length of the RAR time window may be different from those/that of an existing RAR time window. For example, the length of the RAR time window dedicated to the first-type terminal device may be greater than a length of the existing RAR time window.

It should be noted that the foregoing content related to RAR transmission (for example, the Type1-PDCCH CSS set, an initial downlink BWP for monitoring a RAR, and the RAR time window) may be independently implemented without depending on the method in FIG. 5.

S502: If the first RAR is not received in the first RAR time window, the terminal device sends the first PRACH to the network device in a first time period. In other words, random access is re-initiated in the first time period.

Correspondingly, the network device monitors the first PRACH again in the first time period.

Duration of the first time period is greater than duration of a second time period. The first time period is used by the first-type terminal device to re-perform random access when a RAR is not received in a RAR time window, and the RAR is a RAR corresponding to a PRACH sent by the first-type terminal device. The first time period corresponds to the first-type terminal device.

The second time period is used by the second-type terminal device to re-perform random access when a RAR is not received in a RAR time window, and the RAR is a RAR corresponding to a PRACH sent by the second-type terminal device.

In descriptions of an example, a start time point of the first time period is a last symbol of the first RAR time window. Alternatively, a start time point of the first time period is a last symbol of a PDSCH in the first RAR time window.

A start time point of the second time period may be the last symbol of the first RAR time window. Alternatively, a start time point of the second time period may be the last symbol of the PDSCH in the first RAR time window.

In an example, the duration of the first time period is ($N_{T,1}$ + a + X), and the duration of the second time period is ($N_{T,1}$ + a). $N_{T,1}$ is processing duration of a PDSCH of the first-type terminal device or the second-type terminal device, X is greater than 0, and a is a preset value. For example, a may be 0.75. For a specific value of $N_{T,1}$, refer to chapter 8.2 in 3GPP TS 38.213 Release 17.4.0. In a specific example, $N_{T,1}$ is duration of $N_1$ OFDM symbols corresponding to PDSCH processing time of a UE processing capability 1. For a specific value of $N_1$, refer to descriptions of $N_1$ in chapter 5.3 in 3GPP TS 38.214 Release 17.4.0. Details are not described herein again.

It should be noted that, in specific implementation, a representation form of the duration of the first time period may be not limited to three values, or may be two values. For example, X and a may be combined, that is, the duration of the first time period is ($N_{T,1}$ + A), where A=a+X. Alternatively, X and $N_{T,1}$ may be combined, that is, the duration of the first time period is (N1 + a), where $N1 = N_{T,1}$ + X. It is clear that representation forms of the duration of the first time period may alternatively be other variations of ($N_{T,1}$ + a + X), and are not listed one by one herein.

Optionally, duration in this application, for example, the duration of the first time period, the duration of the second time period, duration of the third time period, duration of the fourth time period, duration of the fifth time period, and duration of the sixth time period, may be in a unit of a symbol. For example, the duration of the first time period is ($N_{T,1}$ + a + X) symbols, and the duration of the second time period is ($N_{T,1}$ + a) symbols. $N_{T,1}$ is a quantity of symbols corresponding to processing the PDSCH by the first-type terminal device or the second-type terminal device.

Alternatively, duration in this application may be in a unit of a time unit (for example, a millisecond or a second). For example, the duration of the first time period is ($N_{T,1}$ + a + X) milliseconds, and the duration of the second time period is ($N_{T,1}$ + a) milliseconds. $N_{T,1}$ is the duration of processing the PDSCH by the first-type terminal device or the second-type terminal device.

For example, X may be predefined. For example, X is a predefined value. For example, X is 1 ms.

Alternatively, X is K times $N_{T,1}$, and K is greater than or equal to 1. For example, K is equal to 1. For example, K is equal to 1. This is equivalent to doubling time for the terminal to process the PDSCH.

Alternatively, X is determined based on a bandwidth (in other words, a quantity of RBs) of a PDSCH carrying the first RAR and a maximum bandwidth (in other words, a quantity of RBs) of baseband processing of the first-type terminal device. For example, X may be determined based on a ratio of the bandwidth (in other words, the quantity of RBs) of the PDSCH carrying the first RAR to the maximum bandwidth (in other words, the quantity of RBs) of the baseband processing of the first-type terminal device. For example, X is equal to duration corresponding to $\left(N_{BW}^1/N_{BW}^2 - 1\right) * N_{T,1}$, X is equal to duration corresponding to $\left(\lceil N_{BW}^1/N_{BW}^2 \rceil - 1\right) * N_{T,1}$, or X is equal to duration corresponding to $\left(\lfloor N_{BW}^1/N_{BW}^2 \rfloor - 1\right) * N_{T,1}$.

$N_{BW}^1$ is the bandwidth (in other words, the quantity of RBs) of the PDSCH carrying the first RAR, and $N_{BW}^2$ is the maximum bandwidth (in other words, the quantity of RBs) of the baseband processing of the first-type terminal device. For example, it is assumed that the maximum bandwidth of the baseband processing of the first-type terminal device is 25 resource blocks (resource blocks, RBs), and the bandwidth of the PDSCH carrying the first RAR is 100 RBs. In this case, X may be equal to $3N_{T,1}$.

In this application, when random access fails, the terminal device is capable of resending or ready to resend a PRACH in an extended first time period, so that the terminal device can have more time to process the PDSCH. Therefore, a probability of successfully receiving (or decoding) the PDSCH can be increased, and a random access success probability can be increased.

It should be noted that, that the terminal device is capable of resending or ready to resend the PRACH in the first time period does not mean that the terminal device needs to send the PRACH in the time period. The terminal device may send the PRACH in the time period, or may not send the PRACH in the time period. This may specifically depend on implementation of the terminal device or indication of the network device. This application describes an implementation in which the terminal device sends the PRACH in the first time period.

The foregoing step S502 sets forth that if the first RAR is not received in the first RAR time window, the terminal device re-performs random access in the first time period. The following describes examples of scenarios in which random access is re-performed in the first time period.

Example 1: In this example, scenarios in which the RAR is not received may not be distinguished, and random access is re-initiated in the first time period in any scenario in which the RAR is not received.

Specifically, in any one of the following scenarios in which the first RAR is not received, the terminal device re-performs random access in the first time period.

Scenario 1: The first DCI from the network device is not received in the first RAR time window. In other words, the terminal device does not detect, in the first RAR time window, the DCI format 1_0 with the CRC scrambled by the corresponding RA-RNTI.

Scenario 2: The first DCI from the network device is received in the first RAR time window, where first N bits of a system frame number (system frame number, SFN) carried in the first DCI in ascending order are different from first N bits of an SFN corresponding to the first PRACH in ascending order, and N is an integer greater than 0. In other words, the terminal device detects, in the first RAR time window, the DCI format 1_0 with the CRC scrambled by the corresponding RA-RNTI, and least significant bits (least significant bits, LSBs) of an SFN field in the DCI are different from LSBs of the SFN of the first PRACH sent by the terminal device.

Scenario 3: The first DCI from the network device is received in the first RAR time window, and a transport block of a PDSCH scheduled by using the first DCI is not correctly received. In other words, the terminal device does not correctly receive, in the first RAR time window, the transport block (transport block, TB) on the corresponding PDSCH. In other words, the terminal device receives, in the first RAR time window, the DCI format 1_0 with the CRC scrambled by the corresponding RA-RNTI, but does not correctly receive a PDSCH scheduled by using the DCI.

Scenario 4: The first DCI is received in the first RAR time window, and a transport block of a PDSCH scheduled by using the first DCI is correctly received, where the PDSCH scheduled by using the first DCI does not carry the first RAR. In other words, the terminal device does not acknowledge or identify, in the first RAR time window, a RAP ID associated with the sent first PRACH. In other words, the terminal device receives, in the first RAR time window, the DCI format 1_0 with the CRC scrambled by the corresponding RA-RNTI, and correctly receives a PDSCH scheduled by using the DCI, but the PDSCH does not have the RAR of the terminal device.

In the foregoing Example 1, the scenarios in which the RAR is not received are not distinguished, and random access is re-initiated in the first time period in any scenario in which the RAR is not received, to reduce implementation complexity of the terminal device.

Example 2: In this example, scenarios in which the RAR is not received are distinguished. In a scenario in which the PDSCH needs to be parsed and a bandwidth of the PDSCH is greater than the maximum bandwidth of the baseband processing of the first-type terminal device, if the RAR is not received, random access is re-initiated in the first time period.

Specifically, in any one of the following scenarios in which the first RAR is not received, the terminal device re-performs random access in the first time period.

Scenario 5: The first DCI from the network device is received in the first RAR time window, and a transport block of a PDSCH scheduled by using the first DCI is not correctly received, where a bandwidth of the PDSCH scheduled by using the first DCI is greater than the maximum bandwidth of the baseband processing of the first-type terminal device.

Scenario 6: The first DCI is received in the first RAR time window, and a transport block of a PDSCH scheduled by using the first DCI is correctly received, where the PDSCH scheduled by using the first DCI does not carry the first RAR, and a bandwidth of the PDSCH scheduled by using the first DCI is greater than the maximum bandwidth of the baseband processing of the first-type terminal device.

Optionally, in Example 2, in a scenario in which the PDSCH does not need to be parsed, or the PDSCH needs to be parsed but the bandwidth of the PDSCH is not greater than the maximum bandwidth of the baseband processing of the first-type terminal device, if the RAR is not received, the terminal device may re-initiate random access in the second time period.

Specifically, in any one of the following scenarios in which the first RAR is not received, the terminal device may re-perform random access in the second time period.

Scenario 7: The first DCI is not received in the first RAR time window.

Scenario 8: The first DCI is received in the first RAR time window, where first M bits of a system frame number carried in the first DCI in ascending order are different from first M bits of a system frame number corresponding to the first physical random access channel in ascending order, and M is an integer greater than 0.

Scenario 9: The first DCI is received in the first RAR time window, and a transport block of a PDSCH scheduled by using the first DCI is not correctly received, where a bandwidth of the PDSCH scheduled by using the first DCI is not greater than the maximum bandwidth of the baseband processing of the first-type terminal device.

Scenario 10: The first DCI is received in the first RAR time window, and a transport block of a PDSCH scheduled by using the first DCI is correctly received, where the PDSCH scheduled by using the first DCI does not carry the RAR corresponding to the first physical random access channel, and a bandwidth of the PDSCH scheduled by using the first DCI is not greater than the maximum bandwidth of the baseband processing of the first-type terminal device.

In a possible implementation, the first-type terminal device may further send a second PRACH to the network device, and send the second PRACH to the network device in the second time period if one of the following scenarios is met.

Second DCI is not received in a second RAR time window, where the second DCI is used to schedule a PDSCH carrying a RAR.

Alternatively, second DCI is received in a second RAR time window, where first M bits of an SFN carried in the second DCI in ascending order are different from first M bits of an SFN corresponding to the second PRACH in ascending order, and M is an integer greater than 0.

Alternatively, second DCI is received in a second RAR time window, and a transport block of the PDSCH scheduled by using the second DCI is not correctly received, where a bandwidth of the PDSCH scheduled by using the second DCI is not greater than the maximum bandwidth of the baseband processing of the first-type terminal device.

Alternatively, second DCI is received in a second RAR time window, and a transport block of the PDSCH scheduled by using the second DCI is correctly received, where the PDSCH scheduled by using the second DCI does not carry a RAR corresponding to the second PRACH, and a bandwidth of the PDSCH scheduled by using the second DCI is not greater than the maximum bandwidth of the baseband processing of the first-type terminal device.

In the foregoing Example 2, the scenarios in which the RAR is not received are distinguished. In a scenario in which the PDSCH does not need to be parsed (or decoded) or the bandwidth of the PDSCH is small, random access is re-performed in a second time period with short duration, so that a random access latency can be reduced, to improve communication performance.

The foregoing describes an implementation in which the terminal device re-performs random access. It can be learned from the foregoing related descriptions of the 4-step RACH that after receiving the RAR, the terminal device may send a Msg3 to the network device. The following describes a possible manner of sending the Msg3.

Optionally, if the terminal device receives the first RAR from the network device in the first RAR time window, the terminal device sends the Msg3. Specifically, the terminal device may send the Msg3 through a physical uplink shared channel (physical uplink shared channel, PUSCH) scheduled by using a RAR uplink grant (RAR UL grant) carried in the first RAR.

In this manner, if the bandwidth of the PDSCH carrying the first RAR is greater than the maximum bandwidth of the baseband processing of the first-type terminal device, the terminal device may send the Msg3 to the network device after the third time period.

If the bandwidth of the PDSCH carrying the first RAR is not greater than the maximum bandwidth of the baseband processing of the first-type terminal device, the terminal device may send the Msg3 in a random access procedure to the network device after the fourth time period.

The duration of the third time period is greater than the duration of the fourth time period.

In descriptions of an example, the third time period may be understood as minimum time between a last symbol of the PDSCH carrying the first RAR and a 1st symbol of the PUSCH scheduled by the RAR UL grant carried in the first RAR. The fourth time period may be understood as the minimum time between the last symbol of the PDSCH carrying the first RAR and the 1st symbol of the PUSCH scheduled by the RAR UL grant carried in the first RAR.

In an example, the duration of the third time period is $(N_{T,1} + N_{T,2} + b + Y)$, and the duration of the fourth time period is $(N_{T,1} + N_{T,2} + b)$. $N_{T,1}$ is the processing duration of the PDSCH of the first-type terminal device or the second-type terminal device, $N_{T,2}$ is preparation duration of a physical uplink shared channel of the first-type terminal device or the second-type terminal device, Y is greater than 0, and b is a preset value. For example, b may be 0.5.

It should be noted that, in specific implementation, a representation form of the duration of the third time period may be not limited to four values, or may be three values. For example, Y and b may be combined, that is, the duration of the third time period is $(N_{T,1} + N_{T,2} + B)$, where B=b+Y. Alternatively, Y and $N_{T,1}$ may be combined, that is, the duration of the third time period is $(N1 + N_{T,2} + b)$, where $N2 = N_{T,1} + Y$. Alternatively, Y and $N_{T,2}$ may be combined, that is, the duration of the third time period is $(N_{T,1} + N3 + b)$, where $N3 = N_{T,2} + Y$. It is clear that representation forms of the duration of the third time period may alternatively be other variations of $(N_{T,1} + N_{T,2} + b + Y)$, and are not listed one by one herein.

For the value of $N_{T,1}$, refer to the foregoing content. For a value of $N_{T,2}$, refer to chapter 8.3 in 3GPP 38.213 Release 17.4.0. $N_{T,2}$ is duration of $N_2$ OFDM symbols corresponding to PUSCH preparation time of the UE processing capability 1. For a specific value of $N_2$, refer to descriptions of $N_2$ in chapter 6.4 in 3GPP 38.214 Release 17.4.0. Details are not described herein again.

Y is predefined, for example, Y is equal to 1 ms; Y is T times $N_{T,1}$, and T is greater than or equal to 1, for example, Y is equal to 1; or Y is determined based on the bandwidth of the PDSCH carrying the first RAR and the maximum bandwidth of the baseband processing of the first-type terminal device. For details about the foregoing three value rules, refer to the foregoing related descriptions of a value of X. Details are not described herein again. It should be noted that a value of Y may be the same as or different from the value of X. This is not specifically limited herein.

In the foregoing manner, if a time interval between the PDSCH carrying the first RAR and the scheduled PUSCH is not less than the third time period or the fourth time period, the terminal device may send the Msg3.

Optionally, if a time interval between the PDSCH carrying the first RAR and the scheduled PUSCH is less than the third time period or the fourth time period, the terminal device may determine, based on implementation of the terminal device, whether to send the PUSCH.

For example, if the terminal device does not complete processing of the entire PDSCH, the terminal device may not be capable of successfully decoding the PDSCH, and cannot acknowledge a RAR message (namely, the first RAR) of the terminal device. In this case, the terminal device may consider that random access fails, and may send the first PRACH again.

Alternatively, even if the terminal device does not complete processing of the entire PDSCH, the terminal device may still acknowledge a RAR message (namely, the first RAR) of the terminal device based on some data of the PDSCH. In this case, the terminal device may send the Msg3.

Optionally, the terminal device may report a UE type or a capability of the terminal device in the Msg3, for example, report that the terminal device is the first-type terminal device, or report the maximum baseband of the bandwidth processing of the terminal device. Specifically, the terminal device may perform reporting by using a specific logical channel number, or the terminal device may perform reporting through a signaling unit. A reporting manner is not limited in this application.

The foregoing solutions in which the terminal device sends the Msg3 may be independently implemented without depending on the method in FIG. 5.

It can be learned from the foregoing related descriptions of the 4-step RACH that after sending the Msg3 to the network device, the terminal device may receive a Msg4 carrying contention resolution information. Optionally, after receiving the Msg4, the terminal device may send, to the network device, acknowledgment information of a Msg4 PDSCH carrying the contention resolution information, that is, hybrid automatic repeat request-acknowledgment (hybrid automatic retransmission request-acknowledgment, HARQ-ACK) information. The following describes a possible manner of sending the acknowledgment information of the contention resolution information.

Optionally, after receiving the contention resolution information, the terminal device may send the acknowledgment information of the contention resolution information to the network device. Specifically, the terminal device may send the acknowledgment information of the contention resolution information through a physical uplink control channel (physical uplink control channel, PUCCH).

If a bandwidth of the PDSCH carrying the contention resolution information is greater than the maximum bandwidth of the baseband processing of the first-type terminal device, the terminal device sends the acknowledgment information of the contention resolution information to the network device after the fifth time period.

If a bandwidth of the PDSCH carrying the contention resolution information is not greater than the maximum bandwidth of the baseband processing of the first-type terminal device, the terminal device sends the acknowledgment information of the contention resolution information to the network device after the sixth time period.

The duration of the fifth time period is greater than the duration of the sixth time period.

In descriptions of an example, the fifth time period may be understood as minimum time between a last symbol of the PDSCH carrying the contention resolution information and a 1st symbol of the PUCCH carrying the acknowledgment information of the contention resolution information. The sixth time period may be understood as the minimum time between the last symbol of the PDSCH carrying the contention resolution information and the 1st symbol of the PUCCH carrying the acknowledgment information of the contention resolution information.

In an example, the duration of the fifth time period is ($N_{T,1}$ + c + Z), and the duration of the sixth time period is ($N_{T,1}$ + c). Z is greater than 0, and c is a preset value. For example, c may be 0.5. For the value of $N_{T,1}$, refer to the foregoing content.

It should be noted that, in specific implementation, a representation form of the duration of the fifth time period may be not limited to three values, or may be two values. For example, Z and C may be combined, that is, the duration of the fifth time period is ($N_{T,1}$ + C), where C=c+Z. Alternatively, Z and $N_{T,1}$ may be combined, that is, the duration of the fifth time period is ($N4$ + c), where $N4$ = $N_{T,1}$ + Z. It is clear that representation forms of the duration of the fifth time period may alternatively be other variations of ($N_{T,1}$ + c + Z), and are not listed one by one herein.

Z is predefined, for example, Z is equal to 1 ms; Z is H times $N_{T,1}$, and H is greater than or equal to 1, for example, H is equal to 1; or Z is determined based on the bandwidth of the PDSCH carrying the first RAR and the maximum bandwidth of the baseband processing of the first-type terminal device. For details about the foregoing three value rules, refer to the foregoing related descriptions of the value of X. Details are not described herein again. It should be noted that a value of Z may be the same as or different from the value of X. This is not specifically limited herein. The value of Z may be the same as or different from the value of Y. This is not specifically limited herein.

In the foregoing manner, if a time interval between the PDSCH carrying the contention resolution information and the PUCCH carrying the acknowledgment information of the contention resolution information is not less than the fifth time period or the sixth time period, the terminal device may send the acknowledgment information of the contention resolution information.

Optionally, if a time interval between the PDSCH carrying the contention resolution information and the PUCCH carrying the acknowledgment information of the contention resolution information is less than the fifth time period or the sixth time period, the terminal device may determine, based on the implementation of the terminal device, whether to send the acknowledgment information of the contention resolution information.

For example, if the terminal device does not complete processing of the entire PDSCH, the terminal device may not be capable of successfully decoding the PDSCH, and cannot acknowledge the contention resolution information of the terminal device. In this case, the terminal device may consider that random access fails, and may send the first PRACH again.

Alternatively, even if the terminal device does not complete processing of the entire PDSCH, the terminal device may still acknowledge the contention resolution information of the terminal device based on some data of the PDSCH. In this case, the terminal device may send the acknowledgment information of the contention resolution information.

The foregoing solutions in which the terminal device sends the HARQ-ACK information of the Msg4 may be independently implemented without depending on the method in FIG. 5.

The foregoing describes the technical solutions in embodiments of this application by using the 4-step RACH as an example. The foregoing method may also be applied to a 2-step RACH. The following describes the technical solutions in embodiments of this application by using the 2-step RACH as an example.

In the 2-step RACH, the terminal device may send a MsgA to the network device, where the MsgA includes the first PRACH and a PUSCH payload. For details, refer to step S21 in the foregoing term introduction (5).

After sending the MsgA, the terminal device may monitor the first RAR from the network device. For a specific manner of monitoring the first RAR, refer to related descriptions in S501.

If the terminal device does not receive the first RAR in the first RAR time window, the terminal device may resend the MsgA to the network device. That is, random access is re-initiated. For details, refer to related descriptions of S502. Details are not described herein again.

Optionally, if the terminal device receives the first RAR in the first RAR time window, and the first RAR is a fallback RAR (fallbackRAR), the terminal device may resend the PUSCH payload based on the first RAR. For a specific process, refer to the foregoing process of sending the Msg3. Details are not described herein again.

If the terminal device receives the first RAR in the first RAR time window, and the first RAR is a success RAR (successRAR), the terminal device may send acknowledgment information of a MsgB, that is, the acknowledgment information of the contention resolution information. For a specific process, refer to the foregoing process of sending the acknowledgment information of the contention resolution information. Details are not described herein again.

In this embodiment of this application, when a bandwidth of a PDSCH (for example, the PDSCH carrying the RAR or the PDSCH carrying the contention resolution information) is greater than a bandwidth of the terminal device, time for re-performing random access is prolonged, so that time for decoding the PDSCH can be prolonged, and a probability of successfully obtaining information carried in the PDSCH can be increased. This helps increase a success probability of the random access procedure and improve random access performance.

The foregoing describes the random access procedure of the terminal device. Optionally, a similar solution may be further applied to transmission of a SIB1, other system information (other system information, OSI), paging (paging), and the like on a broadcast channel.

For example, if a bandwidth of a PDSCH carrying the broadcast channel is greater than the maximum bandwidth of the baseband processing of the first-type terminal device, time for processing, by the terminal device, the PDSCH carrying the broadcast channel is not less than time for processing, by the second-type terminal device, the PDSCH carrying the broadcast channel. In other words, in the time for processing, by the second-type terminal device, the PDSCH carrying the broadcast channel, a loss of performance of receiving the broadcast channel by the first-type terminal device occurs, and a corresponding demodulation signal to interference plus noise ratio (signal to interference plus noise ratio) is higher than a demodulation SINR of the second-type terminal device for the broadcast channel. However, by prolonging the processing time of the PDSCH carrying the broadcast channel, a loss of the performance of receiving the broadcast channel by the first-type terminal device can be reduced, and correspondingly, the demodulation SINR for the broadcast channel can be reduced.

For example, time for processing, by the first-type terminal device, a PDSCH carrying a first broadcast channel=time for processing, by the second-type terminal device, the PDSCH carrying the first broadcast channel+W. The first broadcast channel may be any one of the foregoing broadcast channels. It should be understood that for different broadcast channels, values of extension time W may be the same or different. This is not specifically limited herein.

W is predefined, for example, W is equal to 1 ms; W is Q times time for processing, by the second-type terminal device, the PDSCH carrying the first broadcast channel, and Q is greater than or equal to 1, for example, Q is equal to 1; or W is determined based on the bandwidth of the PDSCH carrying the first RAR and the maximum bandwidth of the baseband processing of the first-type terminal device. For details about the foregoing three value rules, refer to the foregoing related descriptions of the value of X. Details are not described herein again. It should be noted that the value of W may be the same as or different from values of X, Y, and Z. This is not specifically limited herein.

Optionally, if the bandwidth of the PDSCH carrying the broadcast channel is not greater than the maximum bandwidth of the baseband processing of the first-type terminal device, the time for processing, by the terminal device, the PDSCH carrying the broadcast channel may be equal to the time for processing, by the second-type terminal device, the PDSCH carrying the broadcast channel.

In the foregoing manner, corresponding processing time is determined based on the bandwidth of the PDSCH carrying the broadcast channel, so that a probability of successfully obtaining the broadcast channel can be increased, to help improve the communication performance.

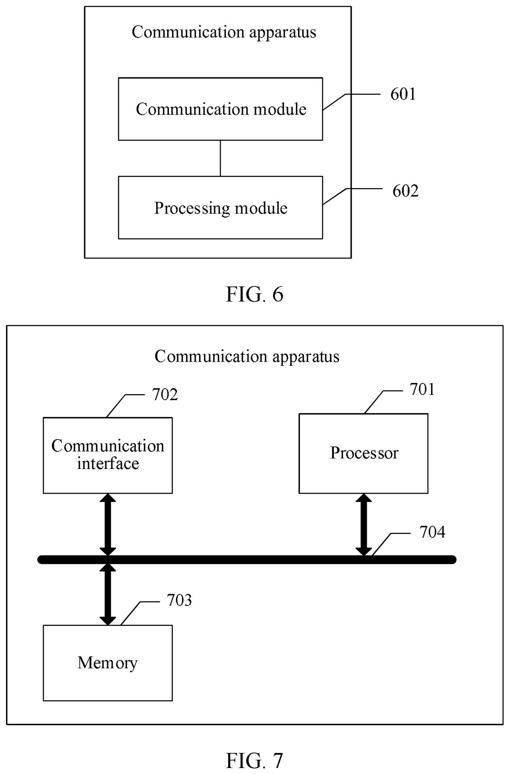

Based on a same concept as the method embodiments, an embodiment of this application provides a communication apparatus. A structure of the communication apparatus may be shown in FIG. 6, and the communication apparatus includes a communication module 601 and a processing module 602.

In an implementation, the communication apparatus may be specifically configured to implement the method performed by the terminal device in the embodiment in FIG. 5. The apparatus may be the terminal device, or may be a chip or a chip set in the terminal device or a part of a chip that is configured to perform a related method function. The communication module 601 is configured to communicate with a network device. The processing module 602 is configured to: send a first physical random access channel to the network device through the communication module 601; and if a first random access response corresponding to the first physical random access channel is not received in a first random access response time window, send the first physical random access channel to the network device in a first time period through the communication module 601. Duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

For example, that the first random access response corresponding to the first physical random access channel is not received in the first random access response time window includes:

first downlink control information from the network device is not received in the first random access response time window, where the first downlink control information is used to schedule a physical downlink shared channel carrying a random access response;

first downlink control information from the network device is received in the first random access response time window, where first N bits of a system frame number carried in the first downlink control information in ascending order are different from first N bits of a system frame number corresponding to the first physical random access channel in ascending order, N is an integer greater than 0, and the first downlink control information is used to schedule a physical downlink shared channel carrying a random access response;

first downlink control information from the network device is received in the first random access response time window, and a transport block of a physical downlink shared channel scheduled by using the first downlink control information is not correctly received, where the first downlink control information is used to schedule a physical downlink shared channel carrying a random access response; or

first downlink control information is received in the first random access response time window, and a transport block of a physical downlink shared channel scheduled by using the first downlink control information is correctly received, where the physical downlink shared channel scheduled by using the first downlink control information does not carry the first random access response, and the first downlink control information is used to schedule a physical downlink shared channel carrying a random access response.

For example, that the random access response corresponding to the first physical random access channel is not received in the first random access response time window includes:

first downlink control information from the network device is received in the first random access response time window, and a transport block of a physical downlink shared channel scheduled by using the first downlink control information is not correctly received, where a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response; or

first downlink control information is received in the first random access response time window, and a transport block of a physical downlink shared channel scheduled by using the first downlink control information is correctly received, where the physical downlink shared channel scheduled by using the first downlink control information does not carry the first random access response, a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response.

Optionally, the processing module 602 is further configured to: send a second physical random access channel to the network device through the communication module 601; and if one of the following scenarios is met, send the second physical random access channel to the network device in the second time period through the communication module 601:

second downlink control information is not received in a second random access response time window, where the second downlink control information is used to schedule a physical downlink shared channel carrying a random access response;

second downlink control information is received in a second random access response time window, where first M bits of a system frame number carried in the second downlink control information in ascending order are different from first M bits of a system frame number corresponding to the second physical random access channel in ascending order, M is an integer greater than 0, and the second downlink control information is used to schedule a physical downlink shared channel carrying a random access response;

second downlink control information is received in a second random access response time window, and a transport block of a physical downlink shared channel scheduled by using the second downlink control information is not correctly received, where a bandwidth of the physical downlink shared channel scheduled by using the second downlink control information is not greater than a maximum bandwidth of baseband processing of the first-type terminal device; or

second downlink control information is received in a second random access response time window, and a transport block of a physical downlink shared channel scheduled by using the second downlink control information is correctly received, where the physical downlink shared channel scheduled by using the second downlink control information does not carry a random access response corresponding to the second physical random access channel, and a bandwidth of the physical downlink shared channel scheduled by using the second downlink control information is not greater than a maximum bandwidth of baseband processing of the first-type terminal device.

For example, the duration of the first time period is ($N_{T,1}$ + a + X), and the duration of the second time period is ($N_{T,1}$ + a). $N_{T,1}$ is processing duration of a physical downlink shared channel of the first-type terminal device or the second-type terminal device, X is greater than 0, and a is a preset value.

For example, X is predefined, for example, X is equal to 1 ms; X is K times $N_{T,1}$, and K is greater than or equal to 1, for example, K is equal to 1; or X is determined based on a bandwidth of a physical downlink shared channel carrying the first random access response and the maximum bandwidth of the baseband processing of the first-type terminal device.

Optionally, the processing module 602 is further configured to: if the first random access response from the network device is received in the first random access response time window, and the bandwidth of the physical downlink shared channel carrying the first random access response is greater than the maximum bandwidth of the baseband processing of the first-type terminal device, send a Msg3 in a random access procedure to the network device after a third time period through the communication module 601; or if the first random access response is received in the first random access response time window, and the bandwidth of the physical downlink shared channel carrying the first random access response is not greater than the maximum bandwidth of the baseband processing of the first-type terminal device, send a Msg3 in a random access procedure to the network device after a fourth time period through the communication module 601, where duration of the third time period is greater than duration of the fourth time period.

For example, the duration of the third time period is ($N_{T,1}$ + $N_{T,2}$ + b + Y), and the duration of the fourth time period is ($N_{T,1}$ + $N_{T,2}$ + b). $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

For example, Y is predefined, for example, Y is equal to 1 ms; Y is T times $N_{T,1}$, and T is greater than or equal to 1, for example, T is equal to 1; or Y is determined based on the bandwidth of the physical downlink shared channel carrying the first random access response and the maximum bandwidth of the baseband processing of the first-type terminal device.

Optionally, the processing module 602 is further configured to: receive contention resolution information from the network device through the communication module 601; and if a bandwidth of a physical downlink shared channel carrying the contention resolution information is greater than the maximum bandwidth of the baseband processing of the first-type terminal device, send acknowledgment information of the contention resolution information to the network device after a fifth time period through the communication module 601; or if a bandwidth of a physical downlink shared channel carrying the contention resolution information is not greater than the maximum bandwidth of the baseband processing of the first-type terminal device, send acknowledgment information of the contention resolution information to the network device after a sixth time period, where duration of the fifth time period is greater than duration of the sixth time period.

For example, the duration of the fifth time period is ($N_{T,1}$ + c + Z), and the duration of the sixth time period is ($N_{T,1}$ + c). $N_{T,1}$ is the processing duration of the physical downlink shared channel of the first-type terminal device or the second-type terminal device, Z is greater than 0, and c is a preset value.

For example, Z is predefined, for example, Z is equal to 1 ms; Z is H times $N_{T,1}$, and H is greater than or equal to 1, for example, H is equal to 1; or Z is determined based on the bandwidth of the physical downlink shared channel carrying the first random access response and the maximum bandwidth of the baseband processing of the first-type terminal device.

For example, a start time point of the first time period is a last symbol of the first random access response time window; or a start time point of the first time period is a last symbol of a physical downlink shared channel in the first random access response time window.

For example, the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

In an implementation, the communication apparatus may be specifically configured to implement the method performed by the network device in the embodiment in FIG. 5. The apparatus may be the network device, or may be a chip or a chip set in the network device or a part of a chip that is configured to perform a related method function. The communication module 601 is configured to communicate with a terminal device. The processing module 602 is configured to: monitor a first physical random access channel from the terminal device through the communication module 601; and monitor the first physical random access channel from the terminal device again in a first time period through the communication module 601. Duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

Optionally, the processing module 602 is further configured to: monitor a second physical random access channel from the terminal device through the communication module 601; send a second physical downlink shared channel to the terminal device in a second random access response time window through the communication module 601, where a bandwidth of the second physical downlink shared channel is not greater than a maximum bandwidth of baseband processing of the first-type terminal device, and the second physical downlink shared channel is used to carry a random access response; and monitor the second physical random access channel from the terminal device again in the second time period.

For example, the duration of the first time period is ($N_{T,1}$ + a + X), and the duration of the second time period is ($N_{T,1}$ + a). $N_{T,1}$ is processing duration of a physical downlink shared channel of the first-type terminal device or the second-type terminal device, X is greater than 0, and a is a preset value.

For example, X is predefined, for example, X is equal to 1 ms; X is K times $N_{T,1}$, and K is greater than or equal to 1, for example, K is equal to 1; or X is determined based on a bandwidth of a physical downlink shared channel carrying a first random access response and the maximum bandwidth of the baseband processing of the first-type terminal device.

Optionally, the processing module 602 is further configured to: send a random access response of the first physical random access channel to the terminal device through the communication module 601; and if a bandwidth of a physical downlink shared channel carrying the random access response is greater than the maximum bandwidth of the baseband processing of the first-type terminal device, receive a third message Msg3 in a random access procedure from the terminal device after a third time period through the communication module 601; or if a bandwidth of a physical downlink shared channel carrying the random access response is not greater than the maximum bandwidth of the baseband processing of the first-type terminal device, receive a third message Msg3 in a random access procedure from the terminal device after a fourth time period, where duration of the third time period is greater than duration of the fourth time period.

For example, the duration of the third time period is ($N_{T,1}$ + $N_{T,2}$ + b + Y), and the duration of the fourth time period is ($N_{T,1}$ + $N_{T,2}$ + b). $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

For example, Y is predefined, for example, Y is equal to 1 ms; Y is T times $N_{T,1}$, and T is greater than or equal to 1, for example, T is equal to 1; or Y is determined based on the bandwidth of the physical downlink shared channel carrying the first random access response and the maximum bandwidth of the baseband processing of the first-type terminal device.

Optionally, the processing module 602 is further configured to: send contention resolution information to the terminal device through the communication module 601; and if a bandwidth of a physical downlink shared channel carrying the contention resolution information is greater than the maximum bandwidth of the baseband processing of the first-type terminal device, receive acknowledgment information of the contention resolution information from the terminal device after a fifth time period through the communication module 601; or if a bandwidth of a physical downlink shared channel carrying the contention resolution information is not greater than the maximum bandwidth of the baseband processing of the first-type terminal device, receive acknowledgment information of the contention resolution information from the terminal device after a sixth time period. Duration of the fifth time period is greater than duration of the sixth time period, the fifth time period corresponds to the first-type terminal device, and the sixth time period corresponds to the first-type terminal device or the second-type terminal device.

For example, the duration of the fifth time period is ($N_{T,1}$ + c + Z), and the duration of the sixth time period is ($N_{T,1}$ + c). $N_{T,1}$ is the processing duration of the physical downlink shared channel of the first-type terminal device or the second-type terminal device, Z is greater than 0, and c is a preset value.

For example, Z is predefined, and Z is equal to 1 ms; Z is H times $N_{T,1}$, and H is greater than or equal to 1, for example, H is equal to 1; or Z is determined based on the bandwidth of the physical downlink shared channel carrying the first random access response and the maximum bandwidth of the baseband processing of the first-type terminal device.

For example, a start time point of the first time period is a last symbol of the first random access response time window; or a start time point of the first time period is a last symbol of a physical downlink shared channel in the first random access response time window.

For example, the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

Division into the modules in embodiments of this application is an example, is merely division into logical functions, and may be other division during actual implementation. In addition, the functional modules in embodiments of this application may be integrated into one processor, or each module may exist alone physically, or two or more modules may be integrated into one module. The integrated module may be implemented in a form of hardware, or may be implemented in a form of a software functional module. It may be understood that for functions or implementation of the modules in this embodiment of this application, further refer to related description in method embodiments.

In a possible manner, the communication apparatus may be shown in FIG. 7. The apparatus may be a communication device or a chip in the communication device. The communication device may be a terminal device, or may be a network device. The apparatus includes a processor 701 and a communication interface 702, and may further include a memory 703. The processing module 602 may be the processor 701. The communication module 601 may be the communication interface 702.

The processor 701 may be a CPU, a digital processing unit, or the like. The communication interface 702 may be a transceiver, may be an interface circuit, for example, a transceiver circuit, or may be a transceiver chip or the like. The apparatus further includes the memory 703, configured to store a program executed by the processor 701. The memory 703 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory 703 is any other medium that can be used to carry or store expected program code in a form of instructions or a data structure and that can be accessed by a computer, but is not limited thereto.

The processor 701 is configured to execute the program code stored in the memory 703, and is specifically configured to perform an action of the processing module 602. Details are not described herein again in this application. The communication interface 702 is specifically configured to perform an action of the communication module 601. Details are not described herein again in this application.

A specific connection medium between the communication interface 702, the processor 701, and the memory 703 is not limited in this embodiment of this application. In this embodiment of this application, the memory 703, the processor 701, and the communication interface 702 are connected through a bus 704 in FIG. 7. The bus is represented by using a bold line in FIG. 7, and a connection manner between other components is merely schematically described, and is not limited thereto. Buses may be classified into an address bus, a data bus, a control bus, and the like. For ease of representation, only one bold line is used for representation in FIG. 7, but this does not mean that there is only one bus or only one type of bus.

An embodiment of this application further provides a computer-readable storage medium, configured to store computer software instructions that need to be executed by the processor. The computer software instructions include a program that needs to be executed by the processor.

An embodiment of this application further provides a communication system, including a communication apparatus configured to implement a function of the terminal device in the embodiment in FIG. 5 and a communication apparatus configured to implement a function of the network device in the embodiment in FIG. 5.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus configured to implement a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

## Claims

1. A communication method, wherein the method comprises:

   sending a first physical random access channel to a network device; and
   if a first random access response corresponding to a third physical random access channel is not received in a first random access response time window, sending the first physical random access channel to the network device in a first time period, wherein
   duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

2. The method according to claim 1, wherein that the first random access response corresponding to the third physical random access channel is not received in the first random access response time window comprises:

   first downlink control information from the network device is not received in the first random access response time window, wherein the first downlink control information is used to schedule a physical downlink shared channel carrying a random access response;
   first downlink control information from the network device is received in the first random access response time window, wherein first N bits of a system frame number carried in the first downlink control information in ascending order are different from first N bits of a system frame number corresponding to the third physical random access channel in ascending order, N is an integer greater than 0, and the first downlink control information is used to schedule a physical downlink shared channel carrying a random access response;
first downlink control information from the network device is received in the first random access response time window, and a transport block of a physical downlink shared channel scheduled by using the first downlink control information is not correctly received, wherein the first downlink control information is used to schedule a physical downlink shared channel carrying a random access response; or
first downlink control information is received in the first random access response time window, and a transport block of a physical downlink shared channel scheduled by using the first downlink control information is correctly received, wherein the physical downlink shared channel scheduled by using the first downlink control information does not carry the first random access response, and the first downlink control information is used to schedule a physical downlink shared channel carrying a random access response.

3. The method according to claim 1, wherein that the first random access response corresponding to the third physical random access channel is not received in the first random access response time window comprises:

   first downlink control information from the network device is received in the first random access response time window, and a transport block of a physical downlink shared channel scheduled by using the first downlink control information is not correctly received, wherein a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response; or
   first downlink control information is received in the first random access response time window, and a transport block of a physical downlink shared channel scheduled by using the first downlink control information is correctly received, wherein the physical downlink shared channel scheduled by using the first downlink control information does not carry the first random access response, a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response.

4. The method according to claim 3, wherein the method further comprises:

sending a second physical random access channel to the network device; and
if one of the following scenarios is met, sending the second physical random access channel to the network device in the second time period:

second downlink control information is not received in a second random access response time window, wherein the second downlink control information is used to schedule a physical downlink shared channel carrying a random access response;
second downlink control information is received in a second random access response time window, wherein first M bits of a system frame number carried in the second downlink control information in ascending order are different from first M bits of a system frame number corresponding to the second physical random access channel in ascending order, M is an integer greater than 0, and the second downlink control information is used to schedule a physical downlink shared channel carrying a random access response;
second downlink control information is received in a second random access response time window, and a transport block of a physical downlink shared channel scheduled by using the second downlink control information is not correctly received, wherein a bandwidth of the physical downlink shared channel scheduled by using the second downlink control information is not greater than a maximum bandwidth of baseband processing of the first-type terminal device; or
second downlink control information is received in a second random access response time window, and a transport block of a physical downlink shared channel scheduled by using the second downlink control information is correctly received, wherein the physical downlink shared channel scheduled by using the second downlink control information does not carry a random access response corresponding to the second physical random access channel, and a bandwidth of the physical downlink shared channel scheduled by using the second downlink control information is not greater than a maximum bandwidth of baseband processing of the first-type terminal device.

5. The method according to any one of claims 1 to 4, wherein the duration of the first time period is ($N_{T,1}$ + a + X), and the duration of the second time period is ($N_{T,1}$ + a), wherein $N_{T,1}$ is processing duration of a physical downlink shared channel of the first-type terminal device or the second-type terminal device, X is greater than 0, and a is a preset value.

6. The method according to claim 5, wherein

X is predefined;
X is K times $N_{T,1}$, and K is greater than or equal to 1; or
X is determined based on a bandwidth of a physical downlink shared channel carrying the first random access response and the maximum bandwidth of the baseband processing of the first-type terminal device.

7. The method according to claim 6, wherein X is 1 millisecond.

8. The method according to any one of claims 1 to 7, wherein the method further comprises:

if the first random access response from the network device is received in the first random access response time window, and the bandwidth of the physical downlink shared channel carrying the first random access response is greater than the maximum bandwidth of the baseband processing of the first-type terminal device, sending a third message Msg3 in a random access procedure to the network device after a third time period; or
if the first random access response is received in the first random access response time window, and the bandwidth of the physical downlink shared channel carrying the first random access response is not greater than the maximum bandwidth of the baseband processing of the first-type terminal device, sending a Msg3 in a random access procedure to the network device after a fourth time period, wherein
duration of the third time period is greater than duration of the fourth time period.

9. The method according to claim 8, wherein the duration of the third time period is ($N_{T,1}$ + $N_{T,2}$ + b + Y), and the duration of the fourth time period is ($N_{T,1}$ + $N_{T,2}$ + b), wherein $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

10. The method according to claim 9, wherein

    Y is predefined;
    Y is T times $N_{T,1}$, and T is greater than or equal to 1; or
    Y is determined based on the bandwidth of the physical downlink shared channel carrying the first random access response and the maximum bandwidth of the baseband processing of the first-type terminal device.

11. The method according to claim 10, wherein Y is 1 millisecond.

12. The method according to any one of claims 1 to 11, wherein the method further comprises:

    receiving contention resolution information from the network device; and
    if a bandwidth of a physical downlink shared channel carrying the contention resolution information is greater than the maximum bandwidth of the baseband processing of the first-type terminal device, sending acknowledgment information of the contention resolution information to the network device after a fifth time period; or
    if a bandwidth of a physical downlink shared channel carrying the contention resolution information is not greater than the maximum bandwidth of the baseband processing of the first-type terminal device, sending acknowledgment information of the contention resolution information to the network device after a sixth time period, wherein
    duration of the fifth time period is greater than duration of the sixth time period.

13. The method according to claim 12, wherein the duration of the fifth time period is $(N_{T,1} + c + Z)$, and the duration of the sixth time period is $(N_{T,1} + c)$, wherein $N_{T,1}$ is the processing duration of the physical downlink shared channel of the first-type terminal device or the second-type terminal device, Z is greater than 0, and c is a preset value.

14. The method according to claim 13, wherein

    Z is predefined;
    Z is H times $N_{T,1}$, and H is greater than or equal to 1; or
    Z is determined based on the bandwidth of the physical downlink shared channel carrying the first random access response and the maximum bandwidth of the baseband processing of the first-type terminal device.

15. The method according to claim 14, wherein Z is 1 millisecond.

16. The method according to any one of claims 1 to 15, wherein

    a start time point of the first time period is a last symbol of the first random access response time window; or
    a start time point of the first time period is a last symbol of a physical downlink shared channel in the first random access response time window.

17. The method according to any one of claims 1 to 16, wherein the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

18. A communication method, wherein the method comprises:

    monitoring a first physical random access channel from a terminal device; and
    monitoring the first physical random access channel from the terminal device again in a first time period, wherein
    duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

19. The method according to claim 18, wherein the method further comprises:
    sending a first physical downlink shared channel to the terminal device in a first random access response time window, wherein the first physical downlink shared channel is used to carry a random access response, and a bandwidth of the first physical downlink shared channel is greater than a maximum bandwidth of baseband processing of the first-type terminal device.

**20.** The method according to claim 18 or 19, wherein the method further comprises:

monitoring a second physical random access channel from the terminal device;
sending a second physical downlink shared channel to the terminal device in a second random access response time window, wherein a bandwidth of the second physical downlink shared channel is not greater than the maximum bandwidth of the baseband processing of the first-type terminal device, and the second physical downlink shared channel is used to carry a random access response; and
monitoring the second physical random access channel from the terminal device again in the second time period.

**21.** The method according to any one of claims 18 to 20, wherein the duration of the first time period is ($N_{T,1}$ + a + X), and the duration of the second time period is ($N_{T,1}$ + a), wherein $N_{T,1}$ is processing duration of a physical downlink shared channel of the first-type terminal device or the second-type terminal device, X is greater than 0, and a is a preset value.

**22.** The method according to claim 21, wherein X is predefined; X is K times $N_{T,1}$, and K is greater than or equal to 1; or X is determined based on a bandwidth of a physical downlink shared channel carrying the first random access response and the maximum bandwidth of the baseband processing of the first-type terminal device.

**23.** The method according to claim 22, wherein X is 1 millisecond.

**24.** The method according to any one of claims 18 to 23, wherein the method further comprises:

sending a random access response of a third physical random access channel to the terminal device; and
if a bandwidth of a physical downlink shared channel carrying the random access response is greater than the maximum bandwidth of the baseband processing of the first-type terminal device, receiving a third message Msg3 in a random access procedure from the terminal device after a third time period; or
if a bandwidth of a physical downlink shared channel carrying the random access response is not greater than the maximum bandwidth of the baseband processing of the first-type terminal device, receiving a third message Msg3 in a random access procedure from the terminal device after a fourth time period, wherein
duration of the third time period is greater than duration of the fourth time period.

**25.** The method according to claim 24, wherein the duration of the third time period is ($N_{T,1}$ + $N_{T,2}$ + b + Y), and the duration of the fourth time period is ($N_{T,1}$ + $N_{T,2}$ + b), wherein $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

**26.** The method according to claim 25, wherein

Y is predefined;
Y is T times $N_{T,1}$, and T is greater than or equal to 1; or
Y is determined based on the bandwidth of the physical downlink shared channel carrying the first random access response and the maximum bandwidth of the baseband processing of the first-type terminal device.

**27.** The method according to claim 26, wherein Y is 1 millisecond.

**28.** The method according to any one of claims 18 to 27, wherein the method further comprises:

sending contention resolution information to the terminal device; and
if a bandwidth of a physical downlink shared channel carrying the contention resolution information is greater than the maximum bandwidth of the baseband processing of the first-type terminal device, receiving acknowledgment information of the contention resolution information from the terminal device after a fifth time period; or
if a bandwidth of a physical downlink shared channel carrying the contention resolution information is not greater than the maximum bandwidth of the baseband processing of the first-type terminal device, receiving acknowledgment information of the contention resolution information from the terminal device after a sixth time period, wherein
duration of the fifth time period is greater than duration of the sixth time period, the fifth time period corresponds to the first-type terminal device, and the sixth time period corresponds to the first-type terminal device or the second-type terminal device.

**29.** The method according to claim 28, wherein the duration of the fifth time period is ($N_{T,1}$ + c + Z), and the duration of the sixth time period is ($N_{T,1}$ +

c), wherein $N_{T,1}$ is the processing duration of the physical downlink shared channel of the first-type terminal device or the second-type terminal device, Z is greater than 0, and c is a preset value.

30. The method according to claim 29, wherein

Z is predefined;
Z is H times $N_{T,1}$, and H is greater than or equal to 1; or
Z is determined based on the bandwidth of the physical downlink shared channel carrying the first random access response and the maximum bandwidth of the baseband processing of the first-type terminal device.

31. The method according to claim 30, wherein Z is 1 millisecond.

32. The method according to any one of claims 18 to 31, wherein

a start time point of the first time period is a last symbol of the first random access response time window; or
a start time point of the first time period is a last symbol of a physical downlink shared channel in the first random access response time window.

33. The method according to any one of claims 18 to 32, wherein the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

34. A communication apparatus, wherein the apparatus comprises:

a communication module, configured to communicate with a network device; and
a processing module, configured to: send a first physical random access channel to the network device through the communication module; and if a first random access response corresponding to a third physical random access channel is not received in a first random access response time window, send the first physical random access channel to the network device in a first time period through the communication module, wherein
duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

35. The apparatus according to claim 34, wherein that the first random access response corresponding to the third physical random access channel is not received in the first random access response time window comprises:

first downlink control information from the network device is not received in the first random access response time window, wherein the first downlink control information is used to schedule a physical downlink shared channel carrying a random access response;
first downlink control information from the network device is received in the first random access response time window, wherein first N bits of a system frame number carried in the first downlink control information in ascending order are different from first N bits of a system frame number corresponding to the third physical random access channel in ascending order, N is an integer greater than 0, and the first downlink control information is used to schedule a physical downlink shared channel carrying a random access response;
first downlink control information from the network device is received in the first random access response time window, and a transport block of a physical downlink shared channel scheduled by using the first downlink control information is not correctly received, wherein the first downlink control information is used to schedule a physical downlink shared channel carrying a random access response; or
first downlink control information is received in the first random access response time window, and a transport block of a physical downlink shared channel scheduled by using the first downlink control information is correctly received, wherein the physical downlink shared channel scheduled by using the first downlink control information does not carry the first random access response, and the first downlink control information is used to schedule a physical downlink shared channel carrying a random access response.

36. The apparatus according to claim 34, wherein that the random access response corresponding to the third physical random access channel is not received in the first random access response time window comprises:

first downlink control information from the network device is received in the first random access response time window, and a transport block of a physical downlink shared channel scheduled by using the first downlink control information is not correctly received, wherein a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response; or
first downlink control information is received in the first random access response time window, and a transport block of a physical downlink shared channel scheduled by using the first downlink control information is correctly received, wherein the physical downlink shared channel scheduled by using the first downlink control information does not carry the first random access response, a bandwidth of the physical downlink shared channel scheduled by using the first downlink control information is greater than a maximum bandwidth of baseband processing of the first-type terminal device, and the first downlink control information is used to schedule a physical downlink shared channel carrying a random access response.

37. The apparatus according to claim 36, wherein the processing module is further configured to:

send a second physical random access channel to the network device through the communication module; and
if one of the following scenarios is met, send the second physical random access channel to the network device in the second time period through the communication module:

second downlink control information is not received in a second random access response time window, wherein the second downlink control information is used to schedule a physical downlink shared channel carrying a random access response;
second downlink control information is received in a second random access response time window, wherein first M bits of a system frame number carried in the second downlink control information in ascending order are different from first M bits of a system frame number corresponding to the second physical random access channel in ascending order, M is an integer greater than 0, and the second downlink control information is used to schedule a physical downlink shared channel carrying a random access response;
second downlink control information is received in a second random access response time window, and a transport block of a physical downlink shared channel scheduled by using the second downlink control information is not correctly received, wherein a bandwidth of the physical downlink shared channel scheduled by using the second downlink control information is not greater than a maximum bandwidth of baseband processing of the first-type terminal device; or
second downlink control information is received in a second random access response time window, and a transport block of a physical downlink shared channel scheduled by using the second downlink control information is correctly received, wherein the physical downlink shared channel scheduled by using the second downlink control information does not carry a random access response corresponding to the second physical random access channel, and a bandwidth of the physical downlink shared channel scheduled by using the second downlink control information is not greater than a maximum bandwidth of baseband processing of the first-type terminal device.

38. The apparatus according to any one of claims 34 to 37, wherein the duration of the first time period is $(N_{T,1} + a + X)$, and the duration of the second time period is $(N_{T,1} + a)$, wherein $N_{T,1}$ is processing duration of a physical downlink shared channel of the first-type terminal device or the second-type terminal device, X is greater than 0, and a is a preset value.

39. The apparatus according to claim 38, wherein

X is predefined;
X is K times $N_{T,1}$, and K is greater than or equal to 1; or
X is determined based on a bandwidth of a physical downlink shared channel carrying the first random access response and the maximum bandwidth of the baseband processing of the first-type terminal device.

40. The apparatus according to claim 39, wherein X is 1 millisecond.

41. The apparatus according to any one of claims 34 to 40, wherein the processing module is further configured to:

if the first random access response from the network device is received in the first random access response time window, and the bandwidth of the physical downlink shared channel carrying the first random access response is greater than the maximum bandwidth of the baseband processing of the first-type terminal device, send a third message Msg3 in a random access procedure to the network device after a third time period through the communication module; or

if the first random access response is received in the first random access response time window, and the bandwidth of the physical downlink shared channel carrying the first random access response is not greater than the maximum bandwidth of the baseband processing of the first-type terminal device, send a Msg3 in a random access procedure to the network device after a fourth time period through the communication module, wherein

duration of the third time period is greater than duration of the fourth time period.

42. The apparatus according to claim 41, wherein the duration of the third time period is ($N_{T,1}$ + $N_{T,2}$ + b + Y), and the duration of the fourth time period is ($N_{T,1}$ + $N_{T,2}$ + b), wherein $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

43. The apparatus according to claim 42, wherein

Y is predefined;
Y is T times $N_{T,1}$, and T is greater than or equal to 1; or
Y is determined based on the bandwidth of the physical downlink shared channel carrying the first random access response and the maximum bandwidth of the baseband processing of the first-type terminal device.

44. The apparatus according to claim 43, wherein Y is 1 millisecond.

45. The apparatus according to any one of claims 34 to 44, wherein the processing module is further configured to:

receive contention resolution information from the network device through the communication module; and

if a bandwidth of a physical downlink shared channel carrying the contention resolution information is greater than the maximum bandwidth of the baseband processing of the first-type terminal device, send acknowledgment information of the contention resolution information to the network device after a fifth time period through the communication module; or

if a bandwidth of a physical downlink shared channel carrying the contention resolution information is not greater than the maximum bandwidth of the baseband processing of the first-type terminal device, send acknowledgment information of the contention resolution information to the network device after a sixth time period, wherein

duration of the fifth time period is greater than duration of the sixth time period.

46. The apparatus according to claim 45, wherein the duration of the fifth time period is ($N_{T,1}$ + c + Z), and the duration of the sixth time period is ($N_{T,1}$ + c), wherein $N_{T,1}$ is the processing duration of the physical downlink shared channel of the first-type terminal device or the second-type terminal device, Z is greater than 0, and c is a preset value.

47. The apparatus according to claim 46, wherein

Z is predefined;
Z is H times $N_{T,1}$, and H is greater than or equal to 1; or
Z is determined based on the bandwidth of the physical downlink shared channel carrying the first random access response and the maximum bandwidth of the baseband processing of the first-type terminal device.

48. The apparatus according to claim 47, wherein Z is 1 millisecond.

49. The apparatus according to any one of claims 34 to 48, wherein

a start time point of the first time period is a last symbol of the first random access response time window; or
a start time point of the first time period is a last symbol of a physical downlink shared channel in the first random access response time window.

50. The apparatus according to any one of claims 34 to 49, wherein the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

51. A communication apparatus, wherein the apparatus comprises:

a communication module, configured to communicate with a terminal device; and
a processing module, configured to: monitor a first physical random access channel from the terminal device through the communication module; and
monitor the first physical random access channel from the terminal device again in a first time period through the communication module, wherein
duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

52. The apparatus according to claim 51, wherein the communication module is further configured to:
send a first physical downlink shared channel to the terminal device in a first random access response time window, wherein the first physical downlink shared channel is used to carry a random access response, and a bandwidth of the first physical downlink shared channel is greater than a maximum bandwidth of baseband processing of the first-type terminal device.

53. The apparatus according to claim 51 or 52, wherein the communication module is further configured to:

monitor a second physical random access channel from the terminal device;
send a second physical downlink shared channel to the terminal device in a second random access response time window, wherein a bandwidth of the second physical downlink shared channel is not greater than the maximum bandwidth of the baseband processing of the first-type terminal device, and the second physical downlink shared channel is used to carry a random access response; and
monitor the second physical random access channel from the terminal device again in the second time period.

54. The apparatus according to any one of claims 51 to 53, wherein the duration of the first time period is $(N_{T,1} + a + X)$, and the duration of the second time period is $(N_{T,1} + a)$, wherein $N_{T,1}$ is processing duration of a physical downlink shared channel of the first-type terminal device or the second-type terminal device, X is greater than 0, and a is a preset value.

55. The apparatus according to claim 54, wherein X is predefined; X is K times $N_{T,1}$, and K is greater than or equal to 1; or X is determined based on a bandwidth of a physical downlink shared channel carrying the first random access response and the maximum bandwidth of the baseband processing of the first-type terminal device.

56. The apparatus according to claim 55, wherein X is 1 millisecond.

57. The apparatus according to any one of claims 54 to 56, wherein the communication module is further configured to:

send a random access response of a third physical random access channel to the terminal device; and
if a bandwidth of a physical downlink shared channel carrying the random access response is greater than the maximum bandwidth of the baseband processing of the first-type terminal device, receive a third message Msg3 in a random access procedure from the terminal device after a third time period; or
if a bandwidth of a physical downlink shared channel carrying the random access response is not greater than the maximum bandwidth of the baseband processing of the first-type terminal device, receive a third message Msg3 in a random access procedure from the terminal device after a fourth time period, wherein
duration of the third time period is greater than duration of the fourth time period.

58. The apparatus according to claim 57, wherein the duration of the third time period is $(N_{T,1} + N_{T,2} + b + Y)$, and the duration of the fourth time period is $(N_{T,1} + N_{T,2} + b)$, wherein $N_{T,1}$ is the processing duration of the physical downlink shared channel of the first-type terminal device or the second-type terminal device, $N_{T,2}$ is preparation duration of a physical uplink shared channel of the first-type terminal device or the second-type terminal device, Y is greater than 0, and b is a preset value.

59. The apparatus according to claim 58, wherein

Y is predefined;
Y is T times $N_{T,1}$, and T is greater than or equal to 1; or

Y is determined based on the bandwidth of the physical downlink shared channel carrying the first random access response and the maximum bandwidth of the baseband processing of the first-type terminal device.

60. The apparatus according to claim 59, wherein Y is 1 millisecond.

61. The apparatus according to any one of claims 51 to 60, wherein the communication module is further configured to:

send contention resolution information to the terminal device; and

if a bandwidth of a physical downlink shared channel carrying the contention resolution information is greater than the maximum bandwidth of the baseband processing of the first-type terminal device, receive acknowledgment information of the contention resolution information from the terminal device after a fifth time period; or

if a bandwidth of a physical downlink shared channel carrying the contention resolution information is not greater than the maximum bandwidth of the baseband processing of the first-type terminal device, receive acknowledgment information of the contention resolution information from the terminal device after a sixth time period, wherein

duration of the fifth time period is greater than duration of the sixth time period, the fifth time period corresponds to the first-type terminal device, and the sixth time period corresponds to the first-type terminal device or the second-type terminal device.

62. The apparatus according to claim 61, wherein the duration of the fifth time period is $(N_{T,1} + c + Z)$, and the duration of the sixth time period is $(N_{T,1} + c)$, wherein $N_{T,1}$ is the processing duration of the physical downlink shared channel of the first-type terminal device or the second-type terminal device, Z is greater than 0, and c is a preset value.

63. The apparatus according to claim 62, wherein

Z is predefined;

Z is H times $N_{T,1}$, and H is greater than or equal to 1; or

Z is determined based on the bandwidth of the physical downlink shared channel carrying the first random access response and the maximum bandwidth of the baseband processing of the first-type terminal device.

64. The apparatus according to claim 63, wherein Z is 1 millisecond.

65. The apparatus according to any one of claims 51 to 64, wherein

a start time point of the first time period is a last symbol of the first random access response time window; or

a start time point of the first time period is a last symbol of a physical downlink shared channel in the first random access response time window.

66. The apparatus according to any one of claims 51 to 65, wherein the maximum bandwidth of the baseband processing of the first-type terminal device is less than a maximum radio frequency bandwidth of the first-type terminal device, and a maximum bandwidth of baseband processing of the second-type terminal device is equal to a maximum radio frequency bandwidth of the second-type terminal device.

67. A computer-readable storage medium, wherein the computer-readable storage medium stores computer-readable instructions, and when the computer-readable instructions are run on a communication apparatus, the method according to any one of claims 1 to 17 is performed, or the method according to any one of claims 18 to 33 is performed.

68. A communication system, wherein the system comprises a terminal device and a network device, wherein

the terminal device sends a first physical random access channel to the network device; and if a first random access response corresponding to the first physical random access channel is not received in a first random access response time window, the terminal device sends the first physical random access channel to the network device in a first time period, wherein

duration of the first time period is greater than duration of a second time period, the first time period corresponds to a first-type terminal device, the second time period is used by a second-type terminal device to re-perform random access when a second random access response is not received in a random access response time window, and the second random access response is a random access response corresponding to a physical random access channel sent by the second-type terminal device.

FIG. 1

FIG. 2

FIG. 3

FIG. 4

FIG. 5

Communication apparatus

Communication module —— 601

Processing module —— 602

FIG. 6

Communication apparatus

—— 702

Communication interface

—— 701

Processor

—— 704

—— 703

Memory

FIG. 7

## INTERNATIONAL SEARCH REPORT

| | International application No. |
|---|---|
| | **PCT/CN2023/142344** |

| A. | CLASSIFICATION OF SUBJECT MATTER |
|---|---|

H04W 74/0833(2024.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNABS, CJFD, ENTXT, USTXT, WPABS, 3GPP: 随机接入响应, 物理随机接入信道, 时间窗, 第一, 第二, 终端, 物理下行共享信道, 接收, 下行控制信息, 系统帧; RAR, PRACH, time window, terminal, first, second, PDSCH, receive, reception, DCI, system frame

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113574958 A (FUJITSU LTD.) 29 October 2021 (2021-10-29)<br>entire document | 1-68 |
| A | CN 111818549 A (POTEVIO INFORMATION TECHNOLOGY CO., LTD.) 23 October 2020 (2020-10-23)<br>entire document | 1-68 |
| A | CN 113498628 A (GUANGDONG OPPO MOBILE COMMUNICATIONS CO., LTD.) 12 October 2021 (2021-10-12)<br>entire document | 1-68 |
| A | US 2018270859 A1 (TELEFONAKTIEBOLAGET LM ERICSSON (PUBL)) 20 September 2018 (2018-09-20)<br>entire document | 1-68 |
| A | NOKIA, NOKIA SHANGHAI BELL. "2-step RACH procedure feature lead summary"<br>*3GPP TSG RAN WG1 #96bis, R1-1905764*, 16 April 2019 (2019-04-16),<br>entire document | 1-68 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 February 2024** | **22 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
Information on patent family members

International application No.

**PCT/CN2023/142344**

| Patent document cited in search report | | | Publication date (day/month/year) | Patent family member(s) | | | Publication date (day/month/year) |
|---|---|---|---|---|---|---|---|
| CN | 113574958 | A | 29 October 2021 | None | | | |
| CN | 111818549 | A | 23 October 2020 | None | | | |
| CN | 113498628 | A | 12 October 2021 | None | | | |
| US | 2018270859 | A1 | 20 September 2018 | US | 11297658 | B2 | 05 April 2022 |
| | | | | EP | 3552451 | A1 | 16 October 2019 |
| | | | | EP | 3552451 | A4 | 08 July 2020 |
| | | | | WO | 2018103092 | A1 | 14 June 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310146209